(19) Europäisches Patentamt
European Patent Office
Office européen des brevets

(11) EP 2 759 328 A1

# (12) DEMANDE DE BREVET EUROPEEN

(43) Date de publication:
**30.07.2014 Bulletin 2014/31**

(21) Numéro de dépôt: **13306608.4**

(22) Date de dépôt: **25.11.2013**

(51) Int Cl.:
***B01D 53/02*** (2006.01) ***B01J 20/32*** (2006.01)
***B01D 53/62*** (2006.01) ***B01D 53/82*** (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **18.12.2012 FR 1203465**

(71) Demandeur: **IFP Energies nouvelles**
**92852 Rueil Malmaison Cedex (FR)**

(72) Inventeurs:
- **PIRNGRUBER, Gerhard**
  **69390 CHARLY (FR)**
- **LEINEKUGEL LE COCQ, Damien**
  **69007 LYON (FR)**
- **JACQUIN, Marc**
  **69002 LYON (FR)**

## (54) Procédé de captage du CO2 par adsorption

(57) L'invention concerne un procédé de captage du $CO_2$ contenu dans un gaz, par exemple des fumées de combustion, par adsorption du $CO_2$ au contact d'un matériau adsorbant composé d'un support solide poreux imprégné d'une amine, ledit matériau adsorbant présentant une affinité modérée pour le $CO_2$. Avantageusement, le support solide poreux comprend une faible quantité d'amine.

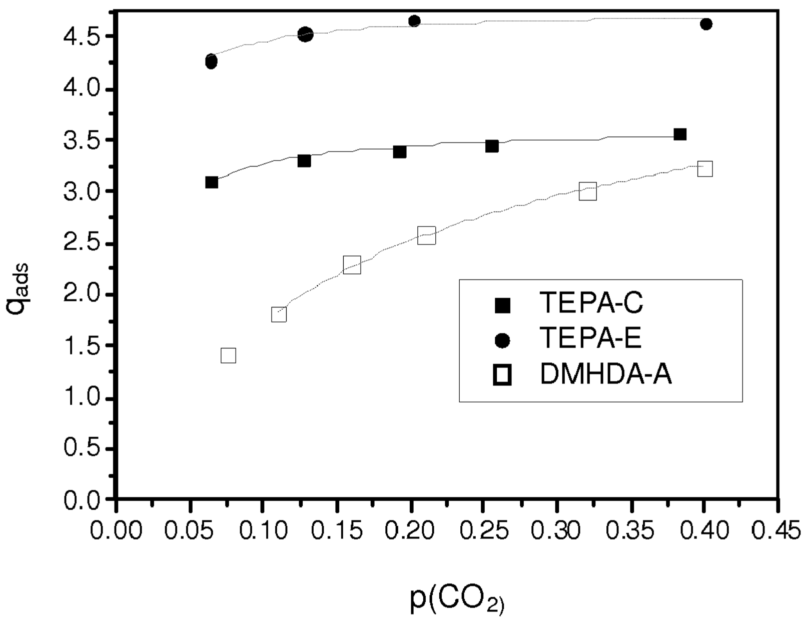


FIG. 11

EP 2 759 328 A1

Printed by Jouve, 75001 PARIS (FR)

## Description

### Domaine de l'invention

Le domaine de l'invention est celui du captage par adsorption d'un composé contenu dans un gaz, en particulier le captage par adsorption du $CO_2$ dans un gaz tel que des fumées de combustion.

### Contexte général

Une grande partie de l'énergie mondiale est produite par la combustion des ressources fossiles qui rejette du $CO_2$ dans l'atmosphère. Ces émissions font augmenter la concentration du $CO_2$ dans l'atmosphère et provoquent un réchauffement climatique. Pour limiter l'ampleur de ce réchauffement, il est nécessaire de réduire les émissions de $CO_2$ liées à la production d'énergie. Une solution consiste à capter puis stocker le $CO_2$ émis par combustion. Les principales sources stationnaires des émissions du $CO_2$ sont les centrales thermiques, la sidérurgie, la cimenterie, les raffineries, etc. Un procédé de captage du $CO_2$ sépare le $CO_2$ des fumées issues de la combustion des ressources fossiles et permet ainsi de récupérer un flux de $CO_2$ concentré (c'est-à-dire comprenant plus de 90 % de $CO_2$, préférentiellement plus de 96 % de $CO_2$), qui peut être séquestré ou utilisé dans l'industrie chimique, agroalimentaire, etc.

L'installation d'un procédé de captage de $CO_2$ demande des investissements considérables et le procédé consomme lui même de l'énergie, ce qui peut provoquer des émissions secondaires de $CO_2$. Dans une centrale électrique, l'installation d'un procédé de captage réduit le rendement énergétique de la centrale - une partie de l'énergie produite par la combustion des ressources fossiles est consommée par l'unité de captage - et augmente le coût de l'électricité par le biais des coûts d'investissement, des coûts opératoires et la diminution du rendement énergétique. Un objectif général consiste à minimiser les coûts d'investissement ainsi que la consommation énergétique du procédé de captage.

Un procédé de captage de référence est à ce jour l'absorption du $CO_2$ par une solution basique, par exemple par une solution aqueuse de monoethanolamine, tel que décrit dans le document FR 2.958.454. Ce procédé présente plusieurs inconvénients. Tout d'abord la consommation énergétique pour la régénération de l'amine est importante et nécessite de prélever sur le cycle de la turbine de la centrale thermique de la vapeur de bonne qualité qui aurait pu être utilisée pour fournir de l'électricité. Par ailleurs, l'amine peut se dégrader, ce qui cause des problèmes de corrosion et d'émissions de composés organiques volatils nécessitant un traitement supplémentaire.

Au lieu d'employer une amine dans une solution aqueuse, on peut immobiliser l'amine sur un support solide. Le procédé de captage de $CO_2$ correspond alors à une séparation par (ad)sorption en phase gaz, tel qu'elle est par exemple décrite dans le brevet FR 2.944.217.

On entend par adsorption l'ensemble des phénomènes physico-chimiques permettant à un solide contenant une amine immobilisée de fixer des molécules de $CO_2$. La sorption sur un solide évite les problèmes de corrosion et peut potentiellement réduire le coût énergétique de la régénération.

Un procédé de captage de $CO_2$ par adsorption est un procédé cyclique dans lequel on effectue une étape d'adsorption de $CO_2$ par un adsorbant en alternance avec une étape de désorption du $CO_2$ permettant la régénération de l'adsorbant. L'étape de désorption pouvant permettre la régénération du solide adsorbant, on utilisera également la dénomination d'étape de régénération pour désigner l'étape de désorption. L'adsorbant peut être régénéré par modulation de la température ou par modulation de la pression (partielle). Après plusieurs cycles, le procédé atteint un état cyclique stationnaire, c'est-à-dire que l'évolution des concentrations en phase gaz et en phase adsorbée devient identique pour chaque cycle. Dans l'état cyclique stationnaire, la quantité adsorbée lors de l'étape d'adsorption est nécessairement identique à la quantité désorbée lors de l'étape de désorption. Il faut donc distinguer deux capacités d'adsorption: la capacité absolue et la capacité cyclique, aussi appelée capacité de travail.

On entend par capacité absolue la quantité de $CO_2$ présente dans le solide dans les conditions de l'étape d'adsorption, c'est-à-dire la quantité de $CO_2$ pouvant être adsorbée sur un solide à l'équilibre avec la charge, ce solide étant initialement exempt de tout $CO_2$.

On entend par capacité cyclique la quantité de $CO_2$ adsorbée sur un solide au cours d'un cycle comprenant notamment une étape d'adsorption et une étape de désorption du $CO_2$. Celle-ci correspond alors nécessairement à la quantité de $CO_2$ qui est désorbée au cours d'un cycle lorsqu'un état pseudo-stationnaire est atteint. La capacité cyclique de l'adsorbant solide dépend fortement de la facilité de régénération.

L'utilisation d'une amine immobilisée sur un support solide pour le captage de $CO_2$ par adsorption est largement discutée dans l'art antérieur. Il existe essentiellement trois méthodes pour immobiliser une amine sur un support solide : (i) le greffage, qui génère des liaisons covalentes entre une molécule avec des fonctions amines et le support (Hiyoshi et al., "Adsorption characteristics of carbon dioxide on organically functionalized SBA-15", Microporous Mesoporous Materials n°84, pp 357-365, 2005), (ii) l'imprégnation, où l'amine est simplement adsorbée dans la porosité et à la surface externe du support solide, (iii) la polymérisation des amines cycliques, tel que l'acridine, en partant d'un groupe nucléophile qui est ancré sur le support solide (Drese et al., "Synthesis-Structure-Property Relationships for Hyperbranched

Aminosilica CO2 Adsorbents", Adv. Funct. Mater., vol. 19, n°23, pp 3821, 2009).

Le brevet US 5.876.488 enseigne par exemple l'immobilisation d'une amine sur un support solide par imprégnation, avec une teneur en amine comprise entre 35% m/m et 75% m/m. Dans le brevet US 6.364.938, l'amine tetraethylenepentamine, modifiée par réaction avec de l'acrylonitrile, constitue un choix préféré en tant qu'amine immobilisée sur un support solide. La demande de brevet WO 2008/021700 A1 cite par exemple les polyamines tetraethylenepentamine (TEPA), pentaethylenehexamine (PEHA) et polyethyleneimine (PEI), ainsi que les amines monoethanolamine (MEA), diethanolamine (DEA), triethanloamine (TEA), methyldiethanolamine (MDEA), düsoproponalamine (DIPA), 2-amino-2-methyl-1,3-propanediole, en tant qu'amines préférées imprégnées sur un support solide, avec une teneur de l'amine se situant entre 25% m/m et 75% m/m.

L'effet de la teneur en PEI sur un support solide constitué par une silice mésoporeuse connue sous le nom de MCM-41 a été étudié par Xu et al., 2003 ("Préparation and characterization of novel CO2 "molecular basket" adsorbents based on polymer-modified mesoporous molecular sieve MCM-41 ", Microporous Mesoporous Materials, vol. 62, n°1-2, pp 29-45, 2003). Les auteurs ont montré que la capacité cyclique d'adsorption augmente jusqu'à une teneur en PEI de 75% m/m, en considérant une étape de désorption à haute température. A cette teneur, le volume poreux du support est totalement rempli par la PEI.

L'effet de la teneur en TEPA sur un support solide constitué par une autre silice mesoporeuse connue sous le nom de SBA-15 a été étudié par Yue et al., 2006 ("CO2 capture by As-prepared SBA-15 with an occluded organic template", Advanced Functional Materials, vol. 16, pp 1717-1722, 2006). Dans cette étude, il est montré que la capacité absolue d'adsorption de $CO_2$ devient maximale lorsque la teneur en TEPA est supérieure à 60 %. Comme dans l'étude de Xu et al. (2003) cité précédemment, les pores du support sont entièrement remplis par la TEPA à cette teneur en amine.

Certaines amines présentent des problèmes de stabilité sur le support, qui impactent directement la performance du procédé de captage par adsorption. Ces problèmes d'instabilité sont principalement liés à la volatilisation des amines imprégnées, ou à une dégradation thermique ou une dégradation par oxydation de celles-ci, qui sont des phénomènes bien connus. Ainsi, les amines possédant des points d'ébullition relativement faibles, tel que la MEA, la DEA et la DIPA, se volatilisent facilement lors qu'on chauffe le solide en vue de le régénérer (Goeppert et al., "Nanostructured silica as a support for regenerable high-capacity organoamine-based CO2 sorbents", Energy Environmental Science 2010, vol. 3, n°12, pp 1949-1960, 1949). Les amines d'un poids moléculaire plus important, tel que la TEPA et la PEI, sont plus fortement immobilisées sur le support. Bien que les polyamines TEPA et PEI comptent parmi les amines les plus souvent citées dans l'art antérieur, elles ne présentent pas un choix optimal en terme de dégradation car elles peuvent facilement former des produits de dégradation par cyclisation (Lepaumier et al., "New Amines for CO2 Capture. III. Effect of Alkyl Chain Length between Amine Functions on Polyamines Degradation", Ind. Eng. Chem. Res., vol. 49, n°10, pp 4553-4560, 2010). Leur dégradation constitue alors un frein à leur régénération.

Malgré les avancées considérables réalisées ces dernières années dans le développement des amines immobilisées pour le captage du $CO_2$ par adsorption, de nombreux problèmes, parmi lesquels ceux cités ci-dessus, restent à résoudre. L'approche généralement suivie, et exposée dans les documents cités, consiste à maximiser la teneur en amine en remplissant au maximum la porosité du support solide par l'amine. Une telle approche peut avoir pour inconvénient de créer des problèmes de diffusion du $CO_2$ de la surface jusqu'au coeur du matériau adsorbant, et ainsi limiter le transfert de matière, en raison du remplissage important de la porosité du support solide. En outre, une telle approche impose une contrainte importante concernant le choix du support solide qui doit nécessairement présenter un volume poreux important. Un risque de volatilisation important est également souvent associé à ce type de systèmes en raison d'un faible confinement de l'amine.

## Objectifs et résumé de l'invention

Il existe donc un besoin de fournir un procédé de captage de $CO_2$ par adsorption utilisant une amine imprégnée sur un support solide qui surmonte, au moins en partie, les inconvénients de l'art antérieur cités plus haut.

La présente invention vise de manière générale à fournir un tel procédé présentant une productivité améliorée et une consommation énergétique limitée.

La présente invention vise en particulier à fournir un tel procédé dans lequel la régénération du matériau adsorbant est facilitée. D'autres objectifs de l'invention consistent à fournir un procédé dans lequel la stabilité de l'amine est améliorée et dans lequel le transfert de matière est amélioré.

La demanderesse a mis à jour que, contrairement à ce que suggère l'art antérieur, l'utilisation d'une amine qui présente une affinité modérée pour le $CO_2$, de préférence employée en faible quantité dans le support solide, permet d'obtenir un gain de productivité et une meilleure stabilité de l'amine, en particulier lorsque le solide adsorbant est régénéré par modulation de la pression partielle.

Pour atteindre au moins l'un des objectifs susvisés, parmi d'autres, la présente invention a pour objet un procédé de captage du $CO_2$ contenu dans un gaz, comprenant une étape d'adsorption par mise en contact du gaz avec un

matériau adsorbant le $CO_2$, dans lequel ledit matériau adsorbant comprend une amine imprégnée sur un support solide poreux et dans lequel ledit matériau a une affinité modérée pour le $CO_2$ telle qu'il a une constante d'adsorption b comprise entre 1 $bar^{-1}$ et 50 $bar^{-1}$ à 348 K, de préférence comprise entre 2 $bar^{-1}$ et 30 $bar^{-1}$ à 348 K, lorsque ledit matériau adsorbant a une isotherme d'adsorption approximée par le modèle de Langmuir selon l'équation $q_{ads} = q_{sat} \cdot \frac{b \cdot p}{1 + b \cdot p}$, avec $q_{ads}$ étant la concentration en $CO_2$ en phase adsorbée, $q_{sat}$ étant la capacité de saturation, et p étant la pression partielle du $CO_2$.

Avantageusement, le support solide poreux comprend moins de 35 % en poids, de préférence moins de 24 % en poids, de l'amine.

De manière préférée, le support solide poreux comprend une amine selon la formule générale suivante:

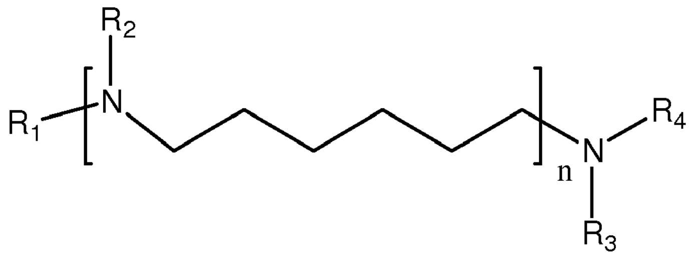

dans laquelle R1, R2, R3 et R4 sont choisis indépendamment parmi H et $CH_3$.

L'amine peut être choisie parmi les composés suivants, pris seuls ou en combinaison:

- dimethyl-hexaméthylenediamine, de formule $(CH_3)NH(CH_2)_6NH(CH_3)$ ;
- methyl(6-{[6-(methylamino)hexyl]aminolhexyl)amine, de formule $(CH_3)NH(CH_2)_6N(CH_3)(CH_2)_6NH(CH_3)$ ; et
- tetramethyl-hexaméthylenediamine, de formule $(CH_3)_2N(CH_2)_6N(CH_3)_2$.

De manière préférée, le support solide poreux est sous forme de particules de taille millimétrique, de préférence de taille comprise entre 0,5 mm et 5 mm.

Le support solide poreux comprend alors de préférence:

- une première porosité comprenant des pores ayant une taille inférieure à 50 nm et étant caractérisée par volume méso/micro-poreux compris entre 0,10 mL et 1 mL pour 1 gramme de support solide poreux, de préférence compris entre 0,10 mL et 0,6 mL pour 1 gramme de support solide poreux, et
- une deuxième porosité comprenant des macropores constituant un volume macroporeux, la deuxième porosité, définie comme le rapport entre le volume macroporeux d'une particule et le volume total d'une particule, étant comprise entre 0,1 et 0,35.

Avantageusement, le support solide poreux est formé de particules primaires de taille nanométrique, de préférence de taille comprise entre 5 nm et 1000 nm, agglomérées par un liant pour former des particules secondaires qui sont les particules de taille millimétrique. Dans ce cas, le support solide poreux comprend de préférence:

- une première porosité comprenant des pores ayant une taille inférieure à 50 nm présents dans les particules primaires, ladite première porosité étant caractérisée par volume méso/micro-poreux compris entre 0,10 mL et 1 mL, de préférence compris entre 0,10 mL et 0,6 mL pour 1 gramme de support solide poreux, et
- une deuxième porosité comprenant des macropores présents dans les particules secondaires et formés par des espaces entre les particules primaires agglomérées, les macropores constituant un volume macroporeux, et la deuxième porosité, définie comme le rapport entre le volume macroporeux d'une particule secondaire et le volume total d'une particule secondaire, étant comprise entre 0,1 et 0,35.

La majorité de l'amine est de préférence contenue dans le volume méso/microporeux formant la première porosité, et moins de 25 %, de préférence moins de 10 %, du volume macroporeux formant la deuxième porosité est occupé par l'amine.

Le support solide poreux peut comprendre de la silice, de l'alumine ou une zéolithe, pris seuls ou en combinaison.

De préférence, l'étape d'adsorption est réalisée à une température comprise entre 40°C et 100°C, de préférence

entre 50 °c et 90°C, et à une pression totale d'adsorption $P_{ads}$ comprise entre 1 bar absolu et 5 bar absolu, de préférence entre 1,1 bar absolu et 2 bar absolu.

Le procédé peut en outre comprendre une étape de désorption du $CO_2$ par baisse de la pression partielle de $CO_2$ de manière à libérer le $CO_2$ contenu dans le matériau adsorbant, le matériau adsorbant étant ainsi de préférence régénéré.

L'étape de désorption comprend avantageusement la mise sous vide du matériau adsorbant, ou la mise en contact du matériau adsorbant avec un gaz de purge, de préférence de la vapeur d'eau, ou une combinaison des deux.

De manière préférée, l'étape de désorption et l'étape d'adsorption sont réalisées à une température similaire, de préférence à plus ou moins 10°C près.

Le matériau adsorbant peut être disposé dans un premier lit, dans lequel on fait circuler le gaz dans le premier lit selon une direction horizontale à travers une section de passage, et dans lequel la section de passage du gaz dans le premier lit est perpendiculaire à la direction horizontale.

De préférence, le matériau adsorbant est disposé dans le premier lit et dans un deuxième lit séparé par un espace du premier lit, la section de passage du gaz dans le deuxième lit étant perpendiculaire à la direction horizontale, et on injecte le gaz dans ledit espace.

De manière préférée, le gaz dans lequel le $CO_2$ est capté consiste en des fumées de combustion.

La présente invention sera mieux comprise et ses avantages apparaîtront plus clairement à la lecture de la description et des exemples ci-après, nullement limitatifs, et illustrés par les figures annexées.

Brève description des figures

La figure 1 schématise un procédé de captage de $CO_2$ selon l'invention et le pré-traitement des fumées à traiter comprenant le $CO_2$.

Les figures 2A et 2B schématisent les étapes du procédé de captage de $CO_2$ selon l'invention. En particulier, la figure 2A illustre l'étape d'adsorption, et la figure 2B illustre l'étape de désorption du $CO_2$.

Les figures 3A et 3B représente un lit vertical du matériau adsorbant pouvant être utilisé dans le procédé de selon l'invention.

Les figures 4 à 6 représentent des modes de mise en oeuvre du procédé de selon l'invention avec des lits verticaux de matériau adsorbant.

La figure 7 schématise l'écoulement du gaz dans le dispositif illustré à la figure 4.

La figure 8 schématise un distributeur de gaz pouvant être mis en oeuvre dans les dispositifs représentés aux figures 4 à 6.

La figure 9 schématise l'écoulement du gaz à travers un lit adsorbant avec un distributeur de gaz tel qu'illustré à la figure 8.

La figure 10 est un diagramme représentant une courbe de perçage de $CO_2$ donnée par le rapport entre le débit de $CO_2$ en entrée et en sortie de la colonne d'absorption/désorption en fonction du temps (en secondes).

La figure 11 est un diagramme comparant des isothermes d'adsorption de $CO_2$ à 348 K pour un matériau adsorbant selon l'invention (DMHDA-A) et des matériaux adsorbants selon l'art antérieur (TEPA-C et TEPA-E).

Sur les figures, les mêmes références désignent des éléments identiques ou analogues.

Description de l'invention

L'invention concerne un procédé de captage de $CO_2$ contenu dans un gaz comprenant une étape d'adsorption par mise en contact du gaz avec un matériau adsorbant le $CO_2$. Ce procédé est caractérisé en ce que le matériau adsorbant, qui est composé par une amine imprégnée sur un support solide poreux, présente une affinité modérée pour le $CO_2$. L'affinité pour le $CO_2$ peut être définie via la forme de l'isotherme d'adsorption de $CO_2$. On considère que le matériau adsorbant possède une affinité modérée pour le $CO_2$ si l'approximation de son isotherme d'adsorption du $CO_2$ à 348 K (environ 75°C) par le modèle de Langmuir selon l'équation (I) ci-dessous donne une constante d'adsorption b comprise entre 1 et 50 $bar^{-1}$ à 348 K, de préférence comprise entre 2 et 30 $bar^{-1}$ à 348 K.

$$q_{ads} = q_{sat} \cdot \frac{b \cdot p}{1 + b \cdot p} \quad \text{(I)}$$

Dans la relation (I), $q_{ads}$ est la concentration en $CO_2$ en phase adsorbée, $q_{sat}$ est la capacité de saturation, c'est-à-dire la concentration en $CO_2$ en phase adsorbée à saturation, b est la constante d'adsorption, et p est la pression partielle de $CO_2$.

Une isotherme d'adsorption de $CO_2$ représente la quantité adsorbée de $CO_2$ sur un solide en fonction de la pression, à une température donnée. La méthode de courbe de perçage est utilisée dans la présente invention pour déterminer les isothermes d'adsorption, et décrite ci-dessous. D'autres méthodes connues de l'homme de l'art pour mesurer des isothermes d'adsorption existent et peuvent être utilisées aux fins de l'invention.

Pour enregistrer une courbe de perçage, on envoie du $CO_2$ dilué dans un gaz inerte, selon un débit donné, dans une colonne qui contient le matériau adsorbant. Le suivi du débit de $CO_2$ en sortie de la colonne donne la courbe de perçage. La quantité adsorbée est calculée par un bilan matière. Cette méthode est par exemple décrite dans l'ouvrage de Ruthven, 1984 (Ruthven, D.M. Principles of adsorption and adsorption processes. John Wiley & Sons ed, 1984). Pour obtenir une isotherme d'adsorption, plusieurs courbes de perçage de $CO_2$ sont réalisées à différentes concentrations de $CO_2$ dans le gaz inerte, à la même température. L'isotherme d'adsorption de $CO_2$ pour des amines immobilisées sur un support solide est une courbe concave qui tend vers une capacité de saturation ($q_{sat}$) lorsque la pression augmente. L'isotherme peut être approximée par l'équation de Langmuir selon l'équation (I) citée ci-dessus. La constante d'adsorption b mesure l'affinité entre le solide et le $CO_2$.

La demanderesse a mis en évidence qu'un tel matériau adsorbant, même lorsqu'il ne comprend qu'une faible quantité d'amine et qu'il a alors une faible capacité d'adsorption absolue, présente de manière surprenante une bonne capacité d'adsorption cyclique. L'affinité modérée du matériau adsorbant pour le $CO_2$ facilite la régénération dudit matériau, et permet ainsi d'atteindre une bonne capacité d'adsorption cyclique. La capacité d'adsorption cyclique peut être supérieure à 0,8 moles de $CO_2$ pour 1 kg d'adsorbant et supérieure à 500 moles pour 1 $m^3$ de grain de l'adsorbant. Le volume d'un grain peut être déterminé par un pénétromètre au mercure. Le volume du grain est le volume qui ne peut pas être pénétré par le mercure à une pression de 0,18 MPa. La consommation énergétique du procédé de captage du $CO_2$ est ainsi également réduite.

L'affinité modérée pour le $CO_2$ limite en outre l'amplitude du pic de température dans le lit lors de l'étape d'adsorption, qui est provoqué par le caractère exothermique de l'adsorption. On peut ainsi limiter les problèmes de dégradation chimique et/ou de volatilisation liés à l'augmentation de la température dans le lit.

De préférence, les amines immobilisées qui correspondent au critère d'affinité modérée tel que défini selon l'invention, répondent à la formule générale (1) suivante:

R1-[N(R2)-(CH2)6-]n-N(R3)-R4 (1)

de forme semi-développée suivante :

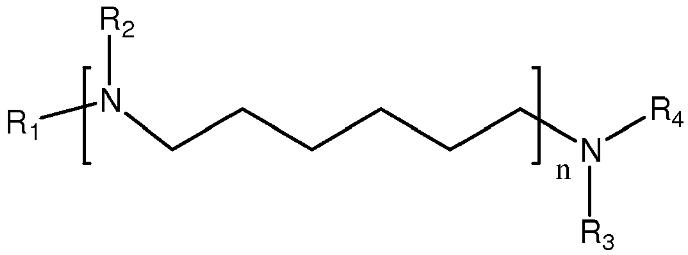

où R1, R2, R3 et R4 sont choisis indépendamment parmi H et $CH_3$.

Selon l'invention, l'amine peut être choisie parmi les composés suivants, pris seuls ou en combinaison, et cités à titre d'exemples non limitatifs de la formule générale (1) ci-dessus:

- la dimethyl-hexaméthylenediamine (DMHDA), avec, selon la formule (1), R1 = CH3; R2 = H, R3 = H, R4 = CH3, n = 1, soit présentant la formule suivante: $(CH_3)NH(CH_2)_6NH(CH_3)$;
- la methyl(6-{[6-(methylamino)hexyl]aminolhexyl)amine, avec, selon la formule (1), R1 = H, R2 = CH3, R3 = CH3, R4 = H, n = 2, soit présentant la formule suivante:

  $(CH_3)NH(CH_2)_6N(CH_3)(CH_2)_6NH(CH_3)$; et

- la tetramethyl-hexaméthylenediamine (TMHDA), avec, selon la formule (1), R1 = CH3, R2 = CH3, R3 = CH3, R4 = CH3, n = 1, c'est-à-dire présentant la formule suivante: $(CH_3)_2N(CH_2)_6N(CH_3)_2$.

Toutes choses égales par ailleurs, les amines selon l'invention répondant à la formule générale (1) ne se dégradent pas via le mécanisme d'élimination d'Hoffman, contrairement aux multiamines séparées de deux ou trois atomes de carbone, comme par exemple la PEI, qui se dégradent de manière importante selon ce mécanisme.

L'amine imprégnée sur le support solide poreux est avantageusement présente en faible quantité. De manière préférée, le support solide poreux comprend moins de 35 % en poids, encore plus préférentiellement moins de 24 % en poids de l'amine.

L'utilisation d'une faible teneur massique en amine permet de limiter les coûts liés à la fabrication du matériau adsorbant. Elle permet également de relâcher les contraintes en terme de volume poreux du support, et de fournir des supports favorables à la stabilité de l'amine imprégnée et à la productivité du procédé de captage de $CO_2$. Ainsi, la présente invention propose d'utiliser pour le matériau adsorbant des supports solides poreux présentant une taille des pores et un volume poreux plus faibles que ceux qui sont typiquement employés dans l'art antérieur, ce qui permet de limiter la volatilisation de l'amine imprégnée. Les supports solides poreux selon l'invention peuvent également présenter une porosité hiérarchique et être très macroporeux, ce qui constitue un avantage pour le transfert de matière. Par porosité hiérarchique, on entend une porosité qui est caractérisée par des dimensions de pores d'échelles différentes. Une porosité hiérarchique peut être définie comme comprenant au moins deux échelles différentes pour la dimension des pores. Classiquement on distingue la microporosité (pores de taille inférieure à environ 2 nm), la mésoporosité (pores de taille comprise entre environ 2 nm et 50 nm) et la macroporosité macroporosité (pores de taille supérieure à environ 50 nm). Des méthodes de détermination de la distribution de la taille de pores sont décrites dans les documents normatifs ISO 15901-1, ISO 15901-2 et ISO 15901-3.

Le support solide poreux comprend de préférence de la silice, de l'alumine, ou une zéolithe, pris seuls ou en combinaison, avec de préférence un volume méso/micro-poreux compris entre 0,10 mL et 1 mL pour 1 gramme de support solide poreux, plus préférentiellement compris entre 0,10 mL et 0,6 mL, pour 1 gramme de support solide poreux. On entend par volume méso/micro-poreux le volume formé par les pores ayant une taille inférieure à environ 50 nm. Dans le cas où le support comprend une zéolithe acide, il est préférable de neutraliser l'acidité par échange ionique avant de réaliser l'imprégnation de l'amine. Le support solide peut comprendre d'autres éléments. Avantageusement, le support solide poreux est constitué de silice, d'alumine, ou d'une zéolithe, ou d'une de leur combinaison, avec de préférence un volume méso/micro-poreux compris entre 0,10 mL et 1 mL pour 1 gramme de support solide poreux, plus préférentiellement compris entre 0,10 mL et 0,6 mL, pour 1 gramme de support solide poreux.

Il est préférable de mettre en forme le support sous forme de particules de taille millimétrique afin de minimiser la perte de charge dans le lit d'adsorbant. Ainsi, le support solide poreux est avantageusement sous forme de particules de taille millimétrique, de préférence de taille comprise entre 0,5 mm et 5 mm.

Si les particules ont une forme cylindrique, la taille est par exemple le diamètre du cylindre. Si les particules ont une forme sphérique, la taille est le diamètre de la sphère. Plus généralement, la taille peut être définie par 6 fois le volume de la particule divisé par la surface externe de la particule.

De manière préférée, le support solide poreux a une première porosité et une deuxième porosité, formant un matériau adsorbant à porosité hiérarchique. La première porosité comprend des pores ayant une taille inférieure à 50 nm et est caractérisée par volume méso/micro-poreux compris entre 0,10 mL et 1 mL pour 1 gramme de support solide poreux, de préférence compris entre 0,10 mL et 0,6 mL, pour 1 gramme de support solide poreux. La deuxième porosité comprend les macropores qui constituent un volume macroporeux. La deuxième porosité, définie comme le rapport entre le volume macroporeux d'une particule et le volume total d'une particule, est comprise entre 0,1 et 0,35.

Selon une mise en forme préférée du matériau adsorbant, le support solide poreux est formé de particules primaires de taille nanométrique, de préférence de taille comprise entre 5 nm et 1000 nm, agglomérées par un liant pour former des particules secondaires qui sont les particules de taille millimétrique. Cette agglomération génère un réseau de macropores dans la particule secondaire.

Dans ce cas, le matériau adsorbant peut avoir une première porosité (pores ayant une taille inférieure à 50 nm) présente dans les particules primaires et caractérisée par volume méso/micro-poreux compris entre 0,10 mL et 1 mL pour 1 gramme de support solide poreux, de préférence compris entre 0,10 mL et 0,6 mL, pour 1 gramme de support solide poreux. Une deuxième porosité est présente dans les particules secondaires et comprend des macropores formés par les espaces entre les particules primaires agglomérées, ces macropores constituant un volume macroporeux. La deuxième porosité, définie comme le rapport entre le volume macroporeux d'une particule secondaire et le volume total d'une particule secondaire, est comprise entre 0,1 et 0,35.

De manière préférée, la majorité de l'amine immobilisée sur le support solide poreux est contenue dans le volume méso/micro-poreux formant la première porosité, et moins de 25 %, de préférence moins de 10 %, du volume macroporeux formant la deuxième porosité est occupé par l'amine.

L'agglomération par un liant des particules primaires pour obtenir des particules secondaires millimétriques peut être réalisée par toutes les méthodes connues de l'homme du métier, notamment par extrusion pour former des objets cylindriques ou multilobés tel que décrit dans le brevet US 6.780.817, ou par granulation pour former des objets sphériques comme tel que décrit dans le brevet US 4.704.374. Les liants sont généralement à base de silice et d'alumine,

et peuvent par exemple être des suspensions ou pâtes de silice ou de boéhmite. La quantité de liant introduite est telle que la cohésion des particules primaires est assurée tout en maintenant la macroporosité de l'adsorbant au niveau souhaité.

Dans le procédé selon l'invention, le matériau adsorbant est disposé en lit fixe. Des exemples de mises en oeuvre du procédé sont décrits plus bas.

La fraction de l'amine déposée dans le volume macroporeux peut être déterminée par des mesures du volume macroporeux et du volume micro/mésoporeux avant et après l'imprégnation de l'amine.

L'imprégnation de l'amine réduit le volume micro/mésoporeux ainsi que le volume macroporeux.

Si on considère :

- $V_{1,micro/meso}$ comme étant le volume micro/mesoporeux par gramme du solide avant l'imprégnation de l'amine,
- $V_{1,macro}$ comme étant le volume macroporeux par gramme du solide avant l'imprégnation de l'amine,
- $V_{2,micro/meso}$ comme étant le volume micro/mesoporeux par gramme du solide après l'imprégnation de l'amine,
- $V_{2,macro}$ comme étant le volume macroporeux par gramme du solide après l'imprégnation de l'amine.

Les réductions du volume doivent être corrigées par l'augmentation de la masse du solide, due à l'imprégnation de l'amine. On définit :

$$\Delta V_{micro/meso} = V_{1,micro/meso} - V_{2,micro/meso}/(1\text{-}x)$$

$$\Delta V_{macro} = V_{1,macro} - V_{2,macro}/(1\text{-}x)$$

où x est le pourcentage en poids de l'amine imprégné sur le solide.

La fraction de l'amine déposée dans le volume macroporeux peut alors se calculer selon l'équation suivante:

$$\frac{\Delta V_{macro}}{\Delta V_{macro} + \Delta V_{micro/meso}}$$

Le gaz à traiter par le procédé selon l'invention peut être une fumée de combustion comportant du $CO_2$, par exemple dans une teneur comprise entre 3 % et 30 % volumique. Les fumées de combustion peuvent être produites par une centrale thermique pour la production d'électricité. Le procédé de captage selon l'invention peut également être appliqué à toutes les fumées de combustion, produites par exemple dans une raffinerie, dans une cimenterie, dans une installation de sidérurgie. De manière générale, le procédé selon l'invention peut être appliqué au captage du $CO_2$ contenu dans un gaz.

Les débits de gaz, par exemple des fumées, à traiter par le procédé selon l'invention peuvent être importants, de l'ordre de $10^5$ $Nm^3/h$ pour une cimenterie, $3.10^5$ $Nm^3/h$ pour une installation de sidérurgie, et de l'ordre de $10^6$ à $3.10^6$ $Nm^3/h$ pour une centrale thermique d'électricité.

Les fumées de combustion contiennent principalement de l'azote et du $CO_2$, de l'oxygène et de la vapeur d'eau, ainsi que des traces de NOx et SOx. La concentration volumique de $CO_2$ est typiquement comprise entre 3 % et 30 %, la concentration volumique d'$H_2O$ peut être dans la gamme de 1 % - 15 %, et la concentration volumique cumulée d'azote et d'oxygène peut être comprise entre 50 % et 95 %. La pression des fumées de combustion peut être proche de la pression atmosphérique et à une température comprise entre 100 °C et 250 °C.

Avant d'effectuer le captage de $CO_2$ par le procédé d'adsorption en lit fixe, on peut préparer les fumées en effectuant une ou plusieurs étapes de prétraitement. Les étapes de prétraitement peuvent inclure :

(i) le refroidissement de la charge à une température comprise entre 20°C et 100 °C;
(ii) une étape d'élimination des oxydes d'azote et des oxydes de soufre;
(iii) la compression des fumées à la pression d'adsorption comprise entre 1 bar absolu et 5 bar absolu, et de préférence inférieure à 2 bar absolu;
(iv) la déshydratation des fumées.

Le refroidissement de la charge et la déshydratation des fumées sont des étapes optionnelles. Elles permettent

d'adapter la température et le taux d'humidité des fumées aux conditions optimales pour le fonctionnement de l'adsorbant.

La figure 1 illustre schématiquement le procédé de captage de $CO_2$ selon l'invention et le pré-traitement des fumées à traiter comprenant le $CO_2$. Le gaz à traiter, par exemple des fumées, arrive par le conduit 1. Les fumées peuvent être refroidies dans l'échangeur de chaleur E1 jusqu'à une température comprise entre 20°C et 100°C, de préférence entre 25°C et 50°C. L'eau, qui peut être condensée lors du refroidissement dans E1, est séparée des fumées dans le ballon séparateur B. Les condensats sont évacués du ballon B par le conduit 2, et les fumées refroidies sont évacuées par le conduit 3.

Les fumées refroidies 3 sont introduites dans les unités U pour l'élimination des oxydes d'azote et des oxydes de soufre. Ces unités sont couramment nommées deSOx et deNOx.

Les fumées purifiées 4 sont envoyées dans un compresseur ou une soufflante, K, pour être comprimées jusqu'à une pression d'adsorption $P_{ads}$ comprise entre 1 bar absolu et 5 bar absolu, de préférence entre 1,1 bar absolu et 2 bar absolu.

Puis les fumées peuvent être introduites dans l'unité de déshydratation DH. Par exemple, le procédé de déshydratation est celui décrit par le brevet FR 2.74. 468. Le niveau de déshydratation est choisi en fonction du matériau adsorbant. Certains matériaux adsorbants tolèrent l'humidité et ne nécessitent pas de déshydratation des fumées, d'autres sont très sensibles à l'eau et demandent une déshydratation poussée des fumées. Le gaz déshydraté est évacué de DH par le conduit 5.

L'ordre des opérations du prétraitement des fumées peut être modifié. On peut, par exemple, placer une unité de deNOx, fonctionnant à haute température, en amont de l'échangeur-séparateur E1-B, et une unité de deSOx en aval de l'échangeur-séparateur E1-B, ou encore réaliser les opérations de deNOx et de deSOx à haute température, c'est-à-dire, en amont de l'échangeur-séparateur E1-B.

Après avoir subi le prétraitement, les fumées circulant dans le conduit 5 sont à une température comprise entre 40°C et 100°C, de préférence entre 50 et 90°C. La pression partielle du $CO_2$ dans les fumées circulant dans le conduit 5 est comprise entre $0{,}03xP_{ads}$ bar absolu et $0.3xP_{ads}$ bar absolu, la pression d'adsorption $P_{ads}$ étant la pression lors du contact du gaz à traiter avec le matériau adsorbant dans l'unité C décrite ci-après.

Après prétraitement, les fumées 5 sont introduites dans l'unité C de captage de $CO_2$. Dans cette unité, les fumées sont mises en contact avec un ou plusieurs matériaux adsorbants disposés dans des adsorbeurs en lit. Dans le cas où plusieurs matériaux adsorbants sont utilisés, il peut s'agir d'ensembles support solide/amine où la nature du support et/ou l'amine peuvent varier. L'unité C permet de séparer le flux 5 des fumées en un flux 7 riche en $CO_2$ et un flux 6 constitué des fumées appauvries en $CO_2$. Dans le cas où la désorption du $CO_2$ lors de l'étape de régénération se fait à l'aide d'un gaz de purge, par exemple de la vapeur d'eau à basse pression, un flux supplémentaire appauvri en $CO_2$ est soutiré, noté flux 8, qui est ensuite mélangé avec le flux 6.

Chaque adsorbeur de l'unité C alterne de manière cyclique entre au moins une étape d'adsorption et une étape de désorption du $CO_2$ (ou étape de régénération). Ainsi, une même installation (colonne) peut être utilisée en tant qu'adsorbeur et en tant que régénérateur. La désorption de $CO_2$ est assurée par une baisse de la pression partielle de $CO_2$, soit en tirant sous vide, soit en envoyant un gaz de purge dans l'adsorbeur, soit par une combinaison des deux effets. D'un point de vue énergétique, il est avantageux d'opérer les étapes d'adsorption et de désorption presque à la même température, de préférence à plus ou moins 10°C, sans dépenses d'énergie pour chauffer et refroidir le matériau adsorbant. Les variations de température entre les étapes sont principalement liées l'exothermie de l'adsorption du $CO_2$ et de l'endothermie de la désorption de $CO_2$.

a) Étape d'adsorption

En référence à la figure 2A, on met en contact les fumées de combustion arrivant par le conduit 5 avec le matériau adsorbant en lit fixe dans une colonne C1. La mise en contact dans la colonne C1 peut être réalisée à une pression totale $P_{ads}$ comprise entre 1 bar absolu et 5 bar absolu, préférentiellement entre 1,1 bar absolu et 2 bar absolu, et plus préférentiellement encore entre 1,1 bar absolu et 1,3 bar absolu. La température se situe de préférence entre 40°C et 100°C, plus préférentiellement entre 50°C et 90°C. Une partie, et de préférence au moins 50% volumique, voire au moins 70% volumique ou au moins 90% volumique, du $CO_2$ contenu dans les fumées de combustion est adsorbée par le matériau adsorbant. Les fumées appauvries en $CO_2$ sont évacuées de la colonne C1 par le conduit 6. Lorsque le matériau adsorbant dans la colonne C1 est saturé en $CO_2$, on arrête l'étape d'adsorption.

b) Étape de désorption du $CO_2$ (régénération du matériau adsorbant)

Trois variantes pour réaliser l'étape de désorption sont décrites en référence à la figure 2B.

Dans la première variante, illustrée à la figure 2B, le matériau adsorbant de la colonne C1 est mis en contact avec un gaz de purge, de préférence de la vapeur d'eau, qui arrive par le conduit 9. La vapeur provoque la désorption de $CO_2$ par un effet de dilution. Le mélange de $CO_2$ et de vapeur d'eau est évacué par le conduit 7.

La désorption du $CO_2$ peut également être réalisée sous vide, sans gaz de purge. On place la colonne C1 sous vide à une pression $P_{des}$ comprise entre 0,01 bar absolu et 0,20 bar absolu, préférentiellement entre 0,05 bar absolu et 0,10 bar absolu. La mise sous vide peut être effectuée en obturant les entrées de gaz par les vannes V2 et V5 et en connectant une pompe P à la conduite 10 avec une fermeture des vannes V1 et V3 et une ouverture de la vanne V4. Alternativement, la mise sous vide peut se faire en deux temps, avec une première phase de circulation du fluide à co-courant, c'est-à-dire dans le même sens de circulation du fluide qu'à l'étape d'adsorption, en connectant une pompe P à la conduite 10, en fermant les vannes V1 et V4, les vannes V2 et V5 étant toujours fermées, et en ouvrant la vanne V3. Dans cette première phase le gaz est évacué par le conduit 8 (vanne V6 ouverte et vanne V7 fermée). Une deuxième phase de mise sous vide consiste alors extraire le gaz enrichi en $CO_2$ par le conduit 7 à l'aide de la pompe P en ouvrant la vanne V4 et en fermant les vannes V1 et V3 (V2, V5 et V6 fermées, V7 ouverte). La mise sous vide de la colonne C1 permet de libérer le $CO_2$ adsorbé par le matériau adsorbant. Le flux riche en $CO_2$ est pompé de la colonne C1 et évacué par le conduit 7 (vanne V7 ouverte).

Dans une troisième variante, on peut combiner l'action d'un gaz de purge avec la mise sous vide de la colonne. Si le gaz de purge est de la vapeur d'eau à basse pression et basse température, la mise sous vide de la colonne évite la condensation de l'eau dans la colonne. Ce dernier cas est particulièrement intéressant dans le cas de sites industriels comme les raffineries ou les sites d'incinération des déchets où l'on dispose de la vapeur à basse température. En effet, dans ces cas, l'énergie de cette vapeur à basse température, généralement inférieure à 100°C, voire inférieure à 80°C, est considérée comme non utilisable, et elle est généralement perdue et évacuée dans des échangeurs de chaleur de type aéro-réfrigérant. Dans le cas présent, cette vapeur peut être récupérée et valorisée à l'étape de la régénération par mise en contact du matériau adsorbant avec de la vapeur d'eau sous vide partiel, en évitant ainsi une consommation d'énergie nécessaire à la production de vapeur. Cette mise en contact du gaz de purge avec le matériau adsorbant s'effectue préférentiellement à une température comprise entre 40°C et 100°C, de préférence entre 50°C et 80°C, et à une pression comprise entre 0,1 et 0,7 bar absolu, de préférence comprise entre 0,1 et 0,6 bar absolu. Afin de réaliser la désorption par l'action d'un gaz de purge à basse pression, l'adsorbeur est d'abord dépressurisé en obturant les entrées de gaz par les vannes V2 et V5 et en connectant une pompe P à la conduite 10 (V1 et V4 fermé, V3 ouvert). Une fois que la pression $P_{des}$ est atteinte, la vanne V2 est ouverte pour envoyer le gaz de purge dans la colonne. Le mélange de $CO_2$ et du gaz de purge, par exemple la vapeur d'eau, est évacué par l'action de la pompe à vide P via le conduit 11 (V1 et V3 fermé, V4 ouvert). Selon la composition du mélange soutiré par le conduit 11, il est soit mélangé avec le flux 6 appauvri en $CO_2$ (flux 8), soit envoyé dans la conduite 7 (flux riche en $CO_2$).

La mise sous vide à co-courant, telle que réalisée dans les deuxième et troisième variantes et illustrée à la figure 2B, permet d'augmenter le rendement en $CO_2$ du procédé.

Dans les cas où la désorption est réalisée sous vide, l'étape de désorption doit être suivie par une étape de repressurisation. La repressurisation peut être effectuée, en référence à la figure 2A ou 2B, en obturant une extrémité de la colonne C1, par exemple avec la vanne V1, et en mettant l'autre extrémité de la colonne en contact avec les fumées arrivant par le conduit 5. Lorsque la pression dans la colonne C1 a atteint la valeur $P_{ads}$, la colonne C1 est prête à parcourir un nouveau cycle d'adsorption et de désorption.

Dans un mode de réalisation préféré, plusieurs colonnes d'adsorption/désorption peuvent être simultanément en train de traiter les fumées. Le nombre de colonnes $N_{ads}$, qui sont simultanément en mode adsorption, peut être compris entre 1 et 8, de manière préférée entre 2 et 6. Le nombre total N des colonnes peut être compris entre 8 et 40, de manière préférée entre 10 et 30. Le séquençage assure qu'il y a toujours au moins $N_{ads}$ parmi les N colonnes en mode adsorption tandis que les autres colonnes sont en mode de désorption ou de repressurisation.

La mise en contact entre le gaz et le matériau adsorbant peut être réalisée au moyen d'un lit de matériau adsorbant vertical, tel que décrit dans la demande déposée sous le N° 11/03.171 déposée par la présente demanderesse, et dont une partie de la description est reprise ci-après. Le lit d'adsorbant vertical est traversé horizontalement par le gaz, ce qui permet d'avoir des dimensions de section de passage qui peuvent être très supérieures à celles possibles dans les colonnes circulaires conventionnelles.

Le lit de matériau adsorbant peut être vertical, c'est à dire que la section de passage du gaz à travers le lit est perpendiculaire à une direction horizontale. Le gaz traverse alors le lit selon une direction horizontale. La section de passage du gaz correspond à la surface du lit à travers laquelle le gaz pénètre dans le lit. La section de passage peut être définie en projetant la surface du lit sur un plan vertical qui est perpendiculaire à la direction horizontale de passage du gaz. Ce qui est communément appelé hauteur de lit correspond, dans la présente invention, à la profondeur. Les figures 3A et 3B représentent différents modes de réalisation d'un lit vertical pouvant être utilisé dans le procédé selon l'invention. Sur la figure 3A, le lit est un parallélépipède rectangle de profondeur P, de hauteur H et de longueur L. Le gaz circule selon la direction horizontale de la flèche G1 pour traverser le lit dans sa profondeur P. Dans ce cas, la section de passage du gaz est le rectangle de dimension H et L, la surface du rectangle étant perpendiculaire la direction horizontal G1. En référence à la figure 3B, le lit est formé d'un assemblage de plusieurs parallélépipèdes rectangles de hauteur H, de profondeur P et de longueur L1, L2, L3, L4 et L5. La section de passage du gaz est formée par un rectangle de hauteur H et de longueur L perpendiculaire à la direction G2 de passage du gaz. Le gaz circule selon la direction

horizontale de la flèche G2 pour traverser le lit dans sa profondeur P. Les surfaces d'entrée et de sorties référencées A et B sur les figures 3A et 3B sont réalisées au moyen de grilles qui ont la propriété de contenir le matériau adsorbant et d'être perméable au gaz. Par exemple, on peut utiliser des grilles Johnson. Les surfaces hachurées sur les figures 3A et 3B sont pleines et imperméables au gaz. Ainsi, le matériau adsorbant est disposé entre les grilles A et B et est contenu par les surfaces hachurées. De préférence, le matériau est sous forme de particules, par exemples des billes ou des extrudés, pour pouvoir être facilement introduit et retiré de l'espace situé entre les grilles A et B.

La forme des lits verticaux permet de mettre en oeuvre une grande quantité de matériau adsorbant dont la hauteur H et/ou la longueur L est nettement supérieure à la profondeur P du lit. Selon l'invention, la hauteur H peut être comprise entre 2 m et 30 m et de préférence entre 5 m et 10 m, dont la profondeur de lit, P, est comprise entre 0,2 et 5 m et de préférence entre 0,5 m et 3 m et dont la longueur, L, peut être très grande, de préférence supérieure à 5 m, voire supérieure à 10 m voire supérieure à 20 m. Etant donné qu'il y a peu de contraintes de construction sur la longueur du lit vertical, le ratio L/H peut être grand, de préférence supérieur à 1 ou à 2, voire supérieur à 5. Les dimensions du lit, c'est-à-dire la longueur L, la hauteur H et la profondeur P, peuvent être choisies de manière à faire circuler, à travers le premier lit, un débit de fumées important, supérieur à 1000 $Nm^3/h$, de préférence supérieur à 1500 $Nm^3/h$ voire 2000 $Nm^3/h$, et à une vitesse comprise entre 0,05 m/s et 1,5 m/s.

Le lit vertical peut être mis en oeuvre dans le procédé selon l'invention selon les représentations schématiques des figures 4 et 5. L'unité R est composée de deux lits verticaux L1 et L2 disposés dans une enceinte E, par exemple de forme parallélépipédique rectangle de hauteur Ha, de largeur La et de profondeur Pa. Dans l'enceinte E, les lits L1 et L2 sont séparés par un espace E1, les surfaces d'entrée dans les lits L1 et L2 communiquant avec l'espace E1. De plus, dans l'enceinte E, la surface de sortie du lit L1 communique avec l'espace E2 et la surface de sortie du lit L2 communique avec l'espace E3.

L'unité d'adsorption R représentée par la figure 4 fonctionne en mode adsorption. Le gaz à traiter arrivant par le conduit GE est séparé en différents flux, GE1 et GE2 qui sont injectés dans des colonnes de forme parallélépipédique. La colonne comporte deux lits verticaux L1 et L2 de matériau adsorbant. Le gaz GE1 est envoyé dans l'espace E1 séparant les deux lits L1 et L2. De préférence, les deux lits L1 et L2 sont situés symétriquement par rapport au système d'injection du gaz. Le gaz traverse chacun des lits dans une direction essentiellement horizontale, perpendiculaire à la plus grande section du lit. Après avoir traversé le lit L1, le gaz débouche dans l'enceinte E2. Après avoir traversé le lit L2, le gaz débouche dans l'enceinte E3. Dans les enceintes E2 et E3, le gaz est respectivement collecté dans des tubes de sorties GS1a et GS1b situés de part et d'autre des lits traversés et collecté à plus grande échelle depuis les tuyaux d'évacuations GS.

L'unité R représentée par la figure 5 fonctionne en mode désorption (étape de régénération). Le gaz de purge arrivant par le conduit GP est subdivisé en plusieurs flux, dont les flux arrivant par les conduits GP1 a et GP1 b qui alimentent l'unité R respectivement dans les enceintes E2 et E3. Par exemple pour injecter le gaz dans l'unité R on peut mettre en oeuvre les mêmes systèmes d'introduction que ceux utilisés pour l'évacuation des fumées purifiées à l'étape d'adsorption. Le gaz de purge traverse les lits L1 et L2, puis est collecté dans l'espace E1 situé entre les lits L1 et L2. Le gaz est évacué de l'espace E1 de l'unité R par le conduit d'évacuation GD1, de préférence distinct du système d'alimentation de la phase d'adsorption. Le fait de disposer de différents systèmes d'évacuation soit des fumées purifiées, soit du gaz de purge chargé en $CO_2$ selon que l'on soit dans la phase d'adsorption ou de désorption, permet d'éviter les phénomènes de rétro-mélange dans les tuyaux et dans les zones vides des réacteurs et permet ainsi d'éviter de dégrader les performances de séparation du procédé (taux de captage en phase d'adsorption, pureté en $CO_2$ en phase de désorption).

La figure 6 représente l'unité d'adsorption de la figure 4 dans laquelle on a installé deux lits dont la forme est présentée par la figure 3B.

De préférence, on met en oeuvre un système d'injection et de collecte du gaz en aval et en amont des lits afin d'assurer la distribution la plus homogène possible. En effet, si aucun système d'injection n'est utilisé, on obtient un écoulement tel que représenté sur la figure 7. Sur la figure 7, on alimente l'espace E2 entre les lits L1 et L2 par le conduit GE1 tel que proposé par la figure 4. Cette figure 7 représente les lignes de courant du gaz en phase d'adsorption. On observe que si, en fond de l'espace E1, les lignes de courant alimentent le lit de façon homogène, il n'en est pas de même en entrée de l'espace E1. En effet, on observe de part et d'autre de l'orifice d'alimentation deux zones de recirculation, souvent appelées zones mortes, qui vont accumuler du fluide lors de la phase d'adsorption, et qui est toujours présent lors de la phase de désorption ce qui peut nuire fortement à la pureté du $CO_2$ dans le gaz de purge. Il est donc préférable d'utiliser des systèmes de distribution de gaz par exemple comme celui représenté sur la figure 8. Il s'agit d'un système composé d'un tuyau d'alimentation T qui alimentent une multitude de tuyaux T1 identiques, eux-mêmes équipés de fentes ou d'orifices O permettant une distribution (injection des fumées ou collecte du gaz de purge chargé en $CO_2$ respectivement pour les phases d'adsorption et de désorption). La présente invention peut être utilisée avec une grande variété de ce type de systèmes bien connus par l'homme de métier. Le système de distribution est installé dans l'espace E2 entre les lits L1 et L2.

La figure 9 illustre l'écoulement du gaz distribué par le système décrit en référence à la figure 8, à travers un

lit de matériau adsorbant L1. Le système de tubes perforés T1 permet effectivement de distribuer de façon homogène tant à l'injection à gauche de la figure 9 qu'à la collecte à droite de la figure 9.

**Exemples**

Les exemples présentés ci-après permettent d'illustrer le fonctionnement et les avantages du procédé de captage de $CO_2$ selon l'invention.

***Exemple 1 : Préparation d'une amine immobilisée sur un support selon l'invention***

Le support A est la zéolithe USY CBV780, commercialisée par Zeolyst.
Le support B est une alumine Pural SB3 commercialisée par Sasol.
Les propriétés texturales des supports A et B sont rassemblées dans le Tableau 1. Dans le tableau 1, il est fait référence aux paramètres suivants:

- $S_{BET}$ : surface du solide, déterminé selon la méthode BET (norme ASTM D3663-03)
- $V_{micro}$ : volume microporeux du solide, déterminé selon la méthode t-plot (norme ASTM D4365 - 95)
- $V_{meso}$ : volume mesoporeux du solide
- Densité de grain : masse de grain / volume de grain
- d : 4 fois le volume poreux, divisé par la surface des pores, mesuré par la technique de Barret, Joyner et Halenda (BJH) selon la norme ASTM D4641-12.

Pour neutraliser les sites acides de la zéolithe CBV780, la zéolithe a subit une échange ionique par NaCl avant l'imprégnation du support par l'amine. L'échange ionique consiste à mettre en contact le solide CBV780 avec une solution de 0,1 mol/L NaCl (10 ml/g solide). La suspension est agitée à 90°C pendant 1 h. La poudre est ensuite filtrée et lessivée à l'eau distillée. La procédure est répétée trois fois, puis la poudre est séchée à 95°C pendant une nuit.

Tableau 1

| *Support* | | *$S_{BET}$ (m²/g)* | *$V_{micro}$ (mL/g)* | *$V_{meso}$ (mL/g)* | *Densité grain (g/mL)* | *d = 4V/A BJH des (nm)* |
|---|---|---|---|---|---|---|
| USY CBV780 | A | 830 | 0,21 | 0,32 | 0,51 | 6,6 |
| $Al_2O_3$ Pural SB3 | B | 323 | - | 0,44 | 0,82 | 5,4 |
| $SiO_2$ | C | 240 | - | 0,94 | 0,63 | 13 |
| $SiO_2$ | D | 195 | | 1.41 | 0.44 | 35 |
| $SiO_2$ | E | 161 | | 0.78 | 0.35 | 29 |

1,32 g de l'amine DMHDA sont mélangés avec 40 mL d'éthanol dans un bécher à l'aide d'une agitation par barreau aimanté, et le mélange est laissé sous agitation pendant 30 minutes afin d'homogénéiser la solution.
5 g de support A ou B sont ensuite ajoutés dans la solution, et ce mélange est laissé sous agitation 24 h à température ambiante. Le solvant est alors évaporé à l'aide d'un évaporateur rotatif. Le solide imprégné est récupéré, puis séché dans une étuve à 90°C pendant 12 h. Sa teneur en DMHDA est de 21 %.

***Exemple 2 : Préparation d'une amine imprégnée sur un support selon l'art antérieur***

L'amine TEPA est choisie comme représentative de l'art antérieur. L'art antérieur suggère qu'il faut maximiser la teneur en TEPA sur le support pour obtenir la meilleure performance. Nous avons donc choisi deux supports de silice, C et E, qui possèdent un grand volume poreux et permettent ainsi d'imprégner une grande quantité de TEPA. Les propriétés texturales des deux silices sont rassemblées dans le Tableau 1.
3,47 g de l'amine TEPA sont mélangés avec 40 mL d'éthanol dans un bécher à l'aide d'une agitation par barreau aimanté, et le mélange est laissé sous agitation pendant 30 minutes afin d'homogénéiser la solution.
5 g de support C sont ensuite ajoutés dans la solution, et ce mélange est laissé sous agitation 24 h à température ambiante. Le solvant est alors évaporé à l'aide d'un évaporateur rotatif. Le solide imprégné est récupéré, puis séché dans une étuve à 90°C pendant 12 h. Sa teneur en TEPA est de 41 %.
La même procédure est appliquée pour le support E, à l'exception de la quantité de TEPA qui est ajustée à 2,81 g. La teneur en TEPA du solide imprégné est de 36%.

***Exemple 3 : Isothermes d'adsorption***

Pour mesurer l'isotherme d'adsorption, le solide imprégné est introduit dans une colonne de 0,7 cm de diamètre interne et d'une longueur de 10 cm. La colonne est initialement chauffée dans un flux d'azote à 120°C, maintenue à 120°C pendant 1 h, et ensuite ramenée à une température de 75°C. La courbe de perçage est déclenchée en basculant le flux à l'entrée de la colonne de l'azote pur à un mélange $CO_2/N_2$ avec une concentration volumique de $CO_2$ comprise entre 5 % et 30 %. La concentration de $CO_2$ en sortie de la colonne est suivie par un analyseur infrarouge (après dilution de l'effluent de la colonne par un débit important d'azote). Les résultats sont représentés à la figure 10.

Après perçage total du $CO_2$, la colonne est régénérée par un flux d'azote à 120°C pendant 1 h. Ensuite la procédure est répétée avec une autre concentration volumique de $CO_2$.

La Figure 11 montre les isothermes de $CO_2$ sur les différents matériaux adsorbants, dont la préparation est décrite ci-dessus dans les exemples 1 et 2. Les symboles représentent les points mesurés, les lignes représentent l'ajustement de l'isotherme par le modèle de Langmuir. Les paramètres du modèle de Langmuir permettant d'approximer les isothermes d'adsorption de $CO_2$ à 348 K sont rassemblés dans le Tableau 2. Le Tableau 2 montre que la constante b des matériaux adsorbants selon l'art antérieur (TEPA-C et TEPA-E) est très élevée, c'est-à-dire, supérieure à 80 $bar^{-1}$. La constante d'adsorption b du matériau adsorbant DMHDA-A, préparé selon l'invention, est de 6,2 $bar^{-1}$, ce qui correspond à la définition d'une affinité modérée pour le $CO_2$ selon l'invention.

Tableau 2

| | **Teneur amine** | **b** ($bar^{-1}$) | $\mathbf{q_{sat}}$ (mol/kg) |
|---|---|---|---|
| **TEPA-C** | 41% | 88 | 3,6 |
| **TEPA-E** | 36% | 141 | 4,8 |
| **DMHDA-A** | 21% | 6,2 | 4,6 |

***Exemple 4 : Capacité cyclique***

Pour évaluer la capacité d'adsorption cyclique, le solide imprégné est introduit dans une colonne de 0,7 cm de diamètre interne et d'une longueur de 10 cm. La colonne est initialement chauffée dans un flux d'azote à 120°C, maintenue à 120°C pendant 1 h, et ensuite ramenée à une température de 75°C. Le test d'adsorption cyclique est déclenché en basculant le flux à l'entrée de la colonne de l'azote pur à un mélange $CO_2/N_2$ avec une concentration volumique de 15 % $CO_2$. La concentration de $CO_2$ en sortie de la colonne est suivie par un analyseur infrarouge (après dilution de l'effluent de la colonne par un débit important d'azote). Après perçage total du $CO_2$ de la colonne, on bascule de nouveau d'un mélange $CO_2/N_2$ à un flux d'azote pur afin de désorber le $CO_2$ de la colonne. Le temps de désorption est égal au temps de perçage de $CO_2$. Ce cycle d'adsorption et de désorption est ensuite répété plusieurs fois. Après 2-3 cycles l'état cyclique stationnaire est atteint. Le Tableau 3 rassemble les capacités d'adsorption cyclique à l'état cyclique stationnaire ainsi que la capacité d'adsorption initiale (au premier cycle), c'est-à-dire, la capacité d'adsorption absolue. Les capacités sont exprimées en mol/$m^3$ adsorbant (obtenu en multipliant la capacité en mol/kg par la densité de grain de l'adsorbant).

Tableau 3

| | **Teneur amine** (% m/m) | **Densité de grain** (kg/$m^3$) | **Capacité absolue** (mol/$m^3$) | **Capacité cyclique** (mol/$m^3$) |
|---|---|---|---|---|
| DMHDA-A | 21% | 650 | 1510 | 1480 |
| DMHDA-B | 21% | 1040 | 1660 | 1600 |
| TEPA-C | 41% | 1070 | 3630 | 960 |
| TEPA-E | 36% | 540 | 2480 | 810 |

Le tableau 3 montre que la capacité absolue des matériaux adsorbants préparés selon l'invention est inférieure à celle des matériaux adsorbants selon l'art antérieur. Ceci s'explique par la plus faible teneur en amine et l'affinité modérée pour le $CO_2$. En revanche, la capacité cyclique des matériaux adsorbants préparés selon l'invention est supérieure.

***Exemple** 5 : **Effet de diamètre de pore sur la volatilité***

L'amine DMHDA a été imprégnée sur les supports A, B et C, à une teneur massique de 21%. La stabilité thermique de l'amine sur les trois supports est évaluée via une analyse thermogravimétrique. 20-30 mg de solide sont chauffés de la température ambiante à 500°C, avec une rampe de température de 2°C/min, dans un débit de 3 NUh He (unité T208). La masse m de l'échantillon est suivi en fonction de la température T. Le dérivé de la masse dm/dT donne le pic de température de la désorption pour l'amine du support. Les résultats sont présentés dans le tableau 4.

Tableau 4

| **Support** | **Diamètre de pore du support** (nm) | **Teneur DMHDA** (% m/m) | **Pic température désorption amine** (°C) |
|---|---|---|---|
| A | 6,6 | 21% | 125 |
| B | 5,4 | 21% | 127 |
| C | 13 | 21% | 94 |

Le tableau 4 montre que l'amine se volatilise moins facilement sur les supports A et B que sur le support C. Les supports A et B sont caractérisés par une taille des pores et un volume poreux plus faible que le support C. La faible taille des pores aide à stabiliser l'amine, et le volume poreux est suffisant pour accueillir 21% de DMHDA.

***Exemples 6 : exemples d'applications numériques selon l'invention et à titre comparatif***

Dans l'ensemble des exemples qui suivent, on considère le traitement d'un flux de fumée à traité de 176000 $Nm^3/h$, composé à 15 % mol. de $CO_2$. Ce flux de fumée est à 75°C et 1,425 bar.
Pour chacun des exemples, on utilise une approximation de l'isotherme de sorption du $CO_2$ par l'équation de Langmuir, sous la forme suivante :

$$q_{ads} = q_{sat} \cdot \frac{b_0 \cdot \exp(-\Delta H_{ads}/R \cdot T) \cdot p}{1 + b_0 \cdot \exp(-\Delta H_{ads}/R \cdot T) \cdot p}$$

avec $q_{ads}$ : concentration en $CO_2$ en phase adsorbée (en mol/kg solide), $q_{sat}$ : concentration en $CO_2$ en phase adsorbée à saturation (en mol/kg solide), $b_0$ : terme pré-exponentiel de la constante d'adsorption (en 1/Pa), $\Delta H_{ads}$ : enthalpie de sorption du $CO_2$ (en J/mol), R : la constante des gaz parfaits (R=8,314 J/(mol.K)), p : pression partielle du $CO_2$ (en Pa).

*Exemple 6a - Exemple selon l'art antérieur : solide contenant une forte teneur en amine présentant une forte affinité pour le $CO_2$*

Le solide considéré se présente sous la forme d'un grain sphérique de diamètre moyen 3 mm, au sein duquel des molécules de TEPA sont immobilisées à une teneur de 36%.
La régression de la loi de Langmuir sur les données mesurées au laboratoire donne :

- $q_{sat}$ = 4,8 $mol.kg_{solide}^{-1}$
- $b_0$ = $1{,}39 \cdot 10^{-12}$ $Pa^{-1}$
- $\Delta H_{ads}$ = -60 $kJ.mol^{-1}$

Les lits sont conçus de manière à présenter une faible épaisseur (1 m) et une section élevée (150 $m^2$).
On simule le cycle d'adsorption/désorption décrit précédemment et illustré dans les figures 2A et 2B. La simulation comprend un séquençage de 10 colonnes C1 à C10. Le cycle comprend les étapes d'adsorption ADS, de dépressurisation DEP, de désorption DES et de repressurisation RP. Le temps de repressurisation $t_{rp}$ ainsi que le temps de dépressurisation $t_{dep}$ sont égaux au temps de cycle $t_{cycle}$ divisé par le nombre d'adsorbeur N, en l'occurrence 10. Le début du cycle d'un adsorbeur est décalé par $t_{rp}$ par rapport à l'adsorbeur précédent. Le temps d'adsorption et le temps de désorption sont égaux à $\frac{4}{N} \times t_{cycle}$.

Les conditions opératoires sont les suivantes :

- Pression de désorption de 0,2 bar absolu;
- Quantité de charge injectée au cours d'une étape d'adsorption sur un lit : 1069 $m^3$/cycle;
- Quantité de vapeur d'eau injectée au cours d'une étape de désorption sur un lit : 429 $Nm^3$/cycle.

On obtient par simulation une pureté en $CO_2$ de 99,19% et un rendement en $CO_2$ de 95,9%, avec un rapport entre la quantité d'eau injectée au cours d'un cycle sur la quantité de $CO_2$ produite au cours d'un cycle de 2,79 et un nombre de lit d'adsorbant total de 39 (dont 8 sont simultanément en mode d'adsorption).

*Exemple 6b - Exemple selon une première variante du procédé selon l'invention : solide contenant une faible teneur en amine présentant une faible affinité pour le $CO_2$, avec une première mise en forme*

Le solide considéré se présente sous la forme d'un grain sphérique de diamètre moyen 3 mm, au sein duquel des molécules de DMHDA sont immobilisées à une teneur de 21%.
La régression de la loi de Langmuir sur les données mesurées au laboratoire donne :

- $q_{sat}$ = 4,6 mol.$kg_{solide}^{-1}$
- $b_0$ = $1,09 \cdot 10^{-11}$ $Pa^{-1}$
- $\Delta H_{ads}$ = -45 kJ.$mol^{-1}$

Les lits sont conçus de manière à présenter une faible épaisseur (1 m) et une section élevée (150 $m^2$).
On simule le cycle décrit précédemment à l'exemple 6a.
Les conditions opératoires sont les suivantes :

- Pression de désorption de 0,2 bar absolu ;
- Quantité de charge injectée au cours d'une étape d'adsorption sur un lit : 1680 $m^3$/cycle ;
- Quantité de vapeur d'eau injectée au cours d'une étape de désorption sur un lit : 429 $Nm^3$/cycle.

On obtient par simulation une pureté en $CO_2$ de 99,64% et un rendement en $CO_2$ de 96,4%, avec un rapport entre la quantité d'eau injectée au cours d'un cycle sur la quantité de $CO_2$ produite au cours d'un cycle de 1,76 et un nombre de lit d'adsorbant total de 29 (dont 8 sont simultanément en mode d'adsorption).
On observe que l'utilisation d'un support solide poreux contenant une faible teneur en amine présentant une faible affinité pour le $CO_2$ apporte à la fois un gain en productivité, ainsi qu'une réduction de la consommation de vapeur pour la régénération de l'adsorbant, c'est-à-dire, une réduction de la consommation énergétique.

*Exemple 6c - Exemple selon une seconde variante du procédé selon l'invention : solide contenant une faible teneur en amine présentant une faible affinité pour le CO2, avec une deuxième mise en forme*

Le solide considéré se présente sous la forme d'un grain macroporeux sphérique de diamètre moyen 5,33 mm, constitué de particules sphériques de diamètre moyen de 50 nm-100 nm. Des molécules de DMHDA sont immobilisées au sein des particules micrométriques, à une teneur de 21%.
La régression de la loi de Langmuir sur les données mesurées au laboratoire donne :

- $q_{sat}$ = 4,6 mol.$kg_{solide}^{-1}$
- $b_0$ = $1,09 \cdot 10^{-11}$ $Pa^{-1}$
- $\Delta H_{ads}$ = -45 kJ.$mol^{-1}$

Les lits sont conçus de manière à présenter une faible épaisseur (1 m) et une section élevée (150 $m^2$).
On simule le cycle décrit précédemment à l'exemple 6a.
Les conditions opératoires sont les suivantes :

- Le débit de charge envoyé dans un lit d'adsorption est augmenté d'un facteur 2,66 par rapport à l'exemple précédent.
- Pression de désorption de 0,2 bar absolu ;
- Quantité de charge injectée au cours d'une étape d'adsorption sur un lit : 1680 $m^3$/cycle ;
- Quantité de vapeur d'eau injectée au cours d'une étape de désorption sur un lit : 429 $Nm^3$/cycle.

On obtient par simulation une pureté en $CO_2$ de 99,64% et un rendement en $CO_2$ de 96,4%, avec un rapport entre la quantité d'eau injectée au cours d'un cycle sur la quantité de $CO_2$ produite au cours d'un cycle de 1,76 et un nombre de lit d'adsorbant total de 15 (dont 3 sont simultanément en mode d'adsorption).

Cette deuxième mise en forme particulière permet donc d'augmenter davantage la productivité, tout en maintenant les performances en terme de pureté et rendement de $CO_2$.

## Revendications

1. Procédé de captage du $CO_2$ contenu dans un gaz, comprenant une étape d'adsorption par mise en contact du gaz avec un matériau adsorbant le $CO_2$, dans lequel ledit matériau adsorbant comprend une amine imprégnée sur un support solide poreux et a une affinité modérée pour le $CO_2$ telle qu'il a une constante d'adsorption b comprise entre 1 $bar^{-1}$ et 50 $bar^{-1}$ à 348 K lorsque ledit matériau adsorbant a une isotherme d'adsorption approximée par le modèle de Langmuir selon l'équation $q_{ads} = q_{sat} \cdot \frac{b \cdot p}{1 + b \cdot p}$, avec $q_{ads}$ étant la concentration en $CO_2$ en phase adsorbée, $q_{sat}$ étant la capacité de saturation, et p étant la pression partielle du $CO_2$.

2. Procédé selon la revendication 1, dans lequel le support solide poreux comprend moins de 35 % en poids, de préférence moins de 24 % en poids, de l'amine.

3. Procédé selon l'une des revendications 1 et 2, dans lequel le support solide poreux comprend une amine selon la formule générale (I) suivante:

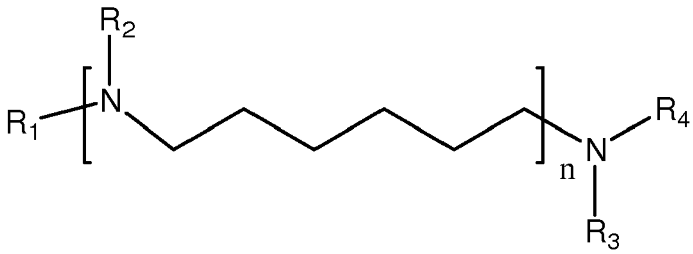

dans laquelle R1, R2, R3 et R4 sont choisis indépendamment parmi H et $CH_3$.

4. Procédé selon la revendication 3, dans lequel l'amine est choisie parmi les composés suivants, pris seuls ou en combinaison:

   - dimethyl-hexaméthylenediamine, de formule $(CH_3)NH(CH_2)_6NH(CH_3)$ ;
   - methyl(6-{[6-(methylamino)hexyl]aminolhexyl)amine, de formule $(CH_3)NH(CH_2)_6N(CH_3)(CH_2)_6NH(CH_3)$ ; et
   - tetramethyl-hexaméthylenediamine, de formule $(CH_3)_2N(CH_2)_6N(CH_3)_2$.

5. Procédé selon l'une des revendications précédentes, dans lequel le support solide poreux est sous forme de particules de taille millimétrique, de préférence de taille comprise entre 0,5 mm et 5 mm.

6. Procédé selon la revendication 5, dans lequel le support solide poreux comprend:

   - une première porosité comprenant des pores ayant une taille inférieure à 50 nm et étant **caractérisée par** volume méso/micro-poreux compris entre 0,10 mL et 1 mL pour 1 gramme de support solide poreux, de préférence compris entre 0,10 mL et 0,6 mL pour 1 gramme de support solide poreux, et
   - une deuxième porosité comprenant des macropores constituant un volume macroporeux, ladite deuxième porosité, définie comme le rapport entre le volume macroporeux d'une particule et le volume total d'une particule, étant comprise entre 0,1 et 0,35.

7. Procédé selon la revendication 5, dans lequel le support solide poreux est formé de particules primaires de taille nanométrique, de préférence de taille comprise entre 5 nm et 1000 nm, agglomérées par un liant pour former des particules secondaires qui sont les particules de taille millimétrique.

**8.** Procédé selon la revendication 7, dans lequel le support solide poreux comprend:

- une première porosité comprenant des pores ayant une taille inférieure à 50 nm présents dans les particules primaires, ladite première porosité étant **caractérisée par** volume méso/micro-poreux compris entre 0,10 mL et 1 mL pour 1 gramme de support solide poreux, de préférence compris entre 0,10 mL et 0,6 mL pour 1 gramme de support solide poreux, et
- une deuxième porosité comprenant des macropores présents dans les particules secondaires et formés par des espaces entre les particules primaires agglomérées, lesdits macropores constituant un volume macroporeux, et ladite deuxième porosité, définie comme le rapport entre le volume macroporeux d'une particule secondaire et le volume total d'une particule secondaire, étant comprise entre 0,1 et 0,35.

**9.** Procédé selon l'une des revendications 6 et 8, dans lequel la majorité de l'amine est contenue dans le volume méso/micro-poreux formant la première porosité, et dans lequel moins de 25 %, de préférence moins de 10 %, du volume macroporeux formant la deuxième porosité est occupé par l'amine.

**10.** Procédé selon l'une des revendications précédentes, dans lequel le support solide poreux comprend de la silice, de l'alumine ou une zéolithe, pris seuls ou en combinaison.

**11.** Procédé selon l'une des revendications précédentes, dans lequel l'étape d'adsorption est réalisée à une température comprise entre 40°C et 100°C, de préférence entre 50°c et 90°C, et à une pression totale d'adsorption $P_{ads}$ comprise entre 1 bar absolu et 5 bar absolu, de préférence entre 1,1 bar absolu et 2 bar absolu.

**12.** Procédé selon l'une des revendications précédentes, comprenant une étape de désorption du $CO_2$ par baisse de la pression partielle de $CO_2$ de manière à libérer le $CO_2$ contenu dans le matériau adsorbant, ledit matériau étant ainsi de préférence régénéré.

**13.** Procédé selon la revendication 12, dans lequel l'étape de désorption comprend la mise sous vide du matériau adsorbant, ou la mise en contact dudit matériau adsorbant avec un gaz de purge, de préférence de la vapeur d'eau, ou une combinaison des deux.

**14.** Procédé selon l'une des revendications 12 et 13, dans lequel l'étape de désorption et l'étape d'adsorption sont réalisées à une température similaire, de préférence à plus ou moins 10°C près.

**15.** Procédé selon l'une des revendications précédentes, dans lequel le matériau adsorbant est disposé dans un premier lit, dans lequel on fait circuler le gaz dans le premier lit selon une direction horizontale à travers une section de passage, et dans lequel la section de passage du gaz dans le premier lit est perpendiculaire à ladite direction horizontale.

**16.** Procédé selon la revendication 15, dans lequel le matériau adsorbant est disposé dans le premier lit et dans un deuxième lit séparé par un espace du premier lit, la section de passage du gaz dans le deuxième lit étant perpendiculaire à ladite direction horizontale, et dans lequel on injecte le gaz dans ledit espace.

**17.** Procédé selon l'une des revendications précédentes, dans lequel le gaz consiste en des fumées de combustion.

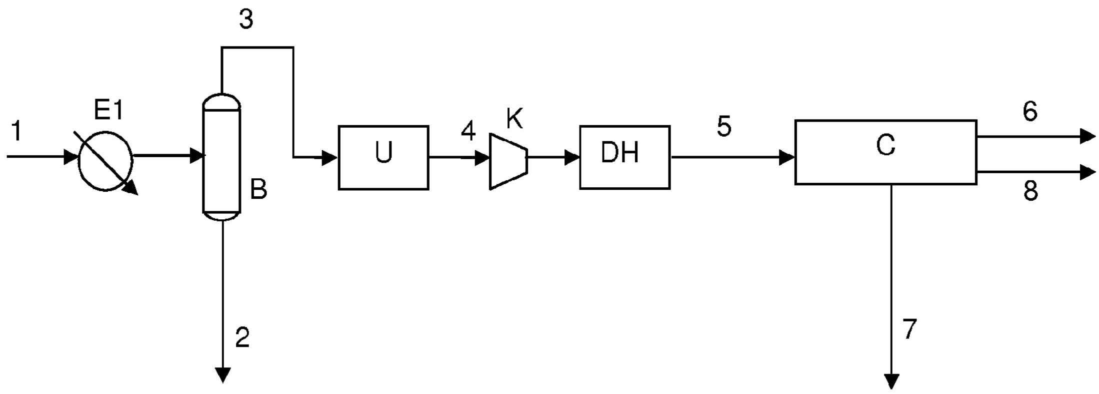


FIG. 1

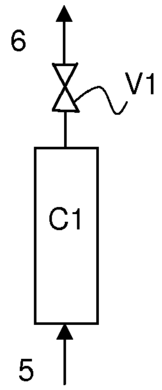


FIG. 2A

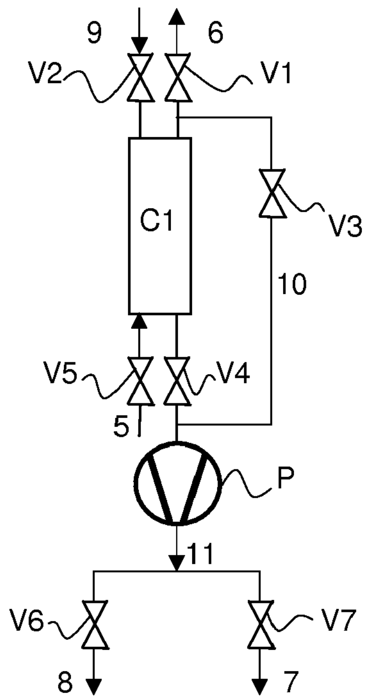


FIG. 2B

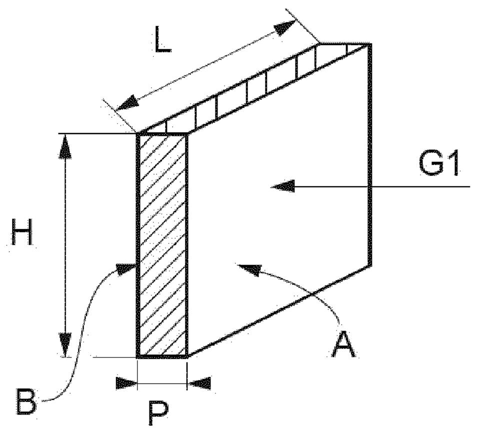


FIG. 3A

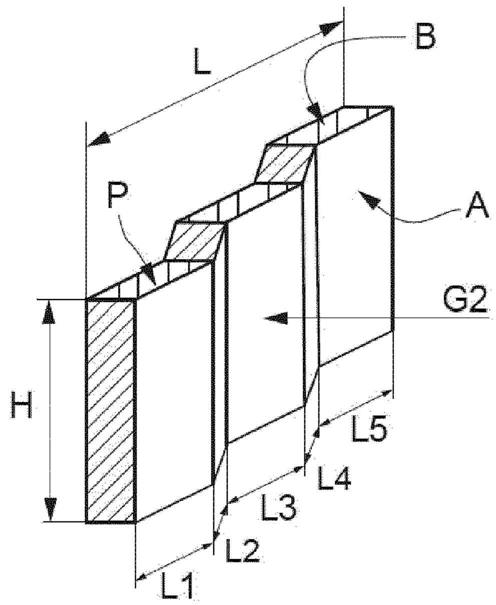


FIG. 3B

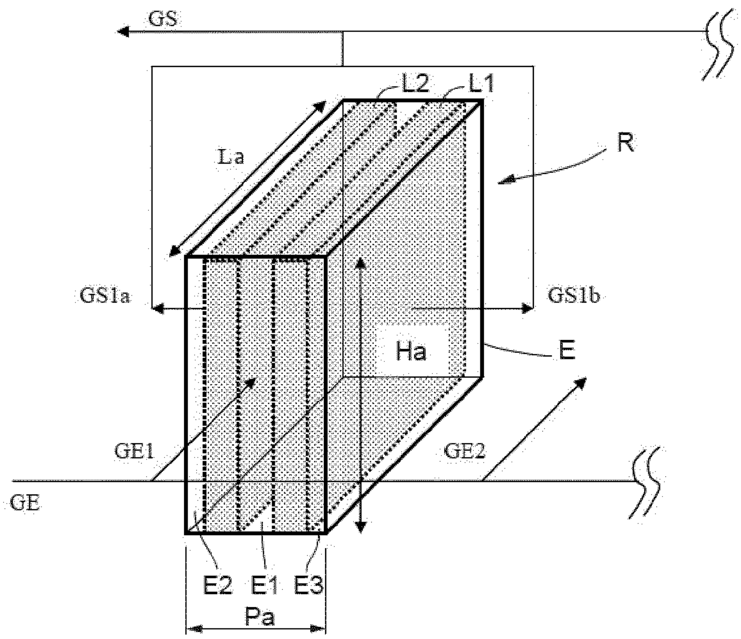


FIG. 4

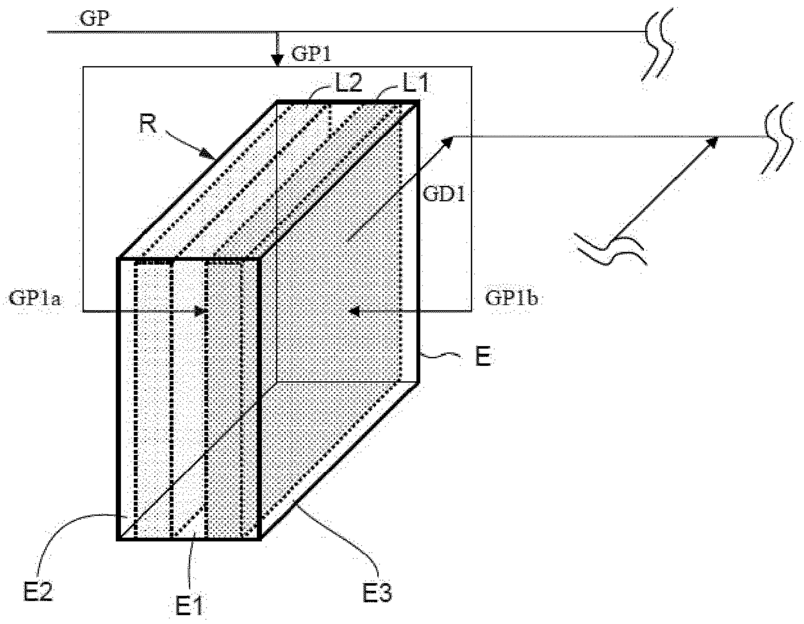


FIG. 5

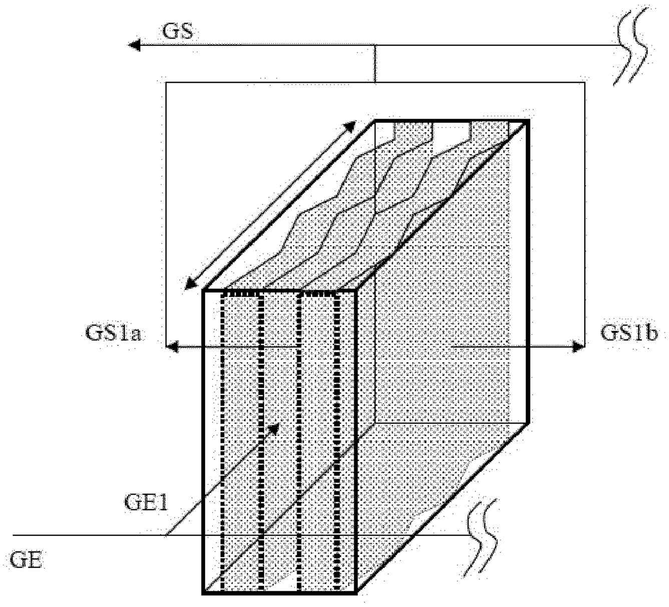


FIG. 6

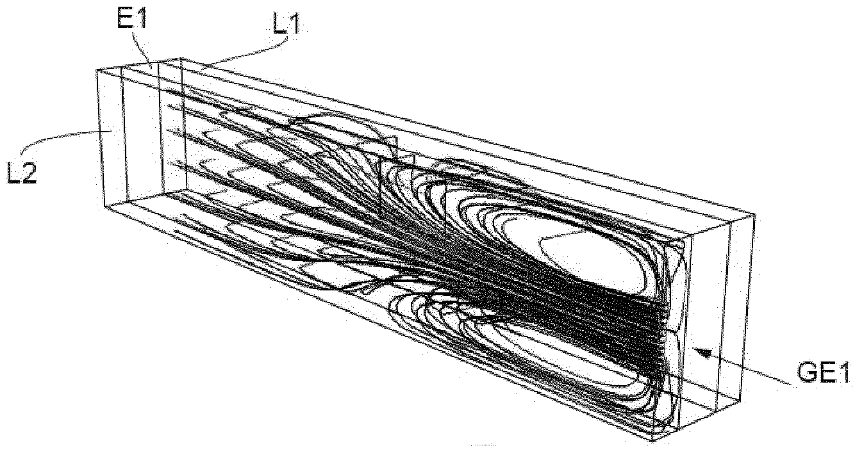


FIG. 7

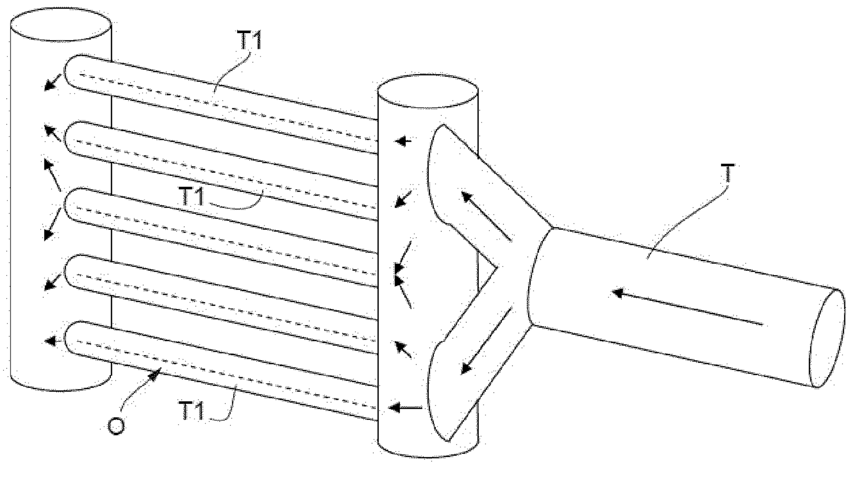


FIG. 8

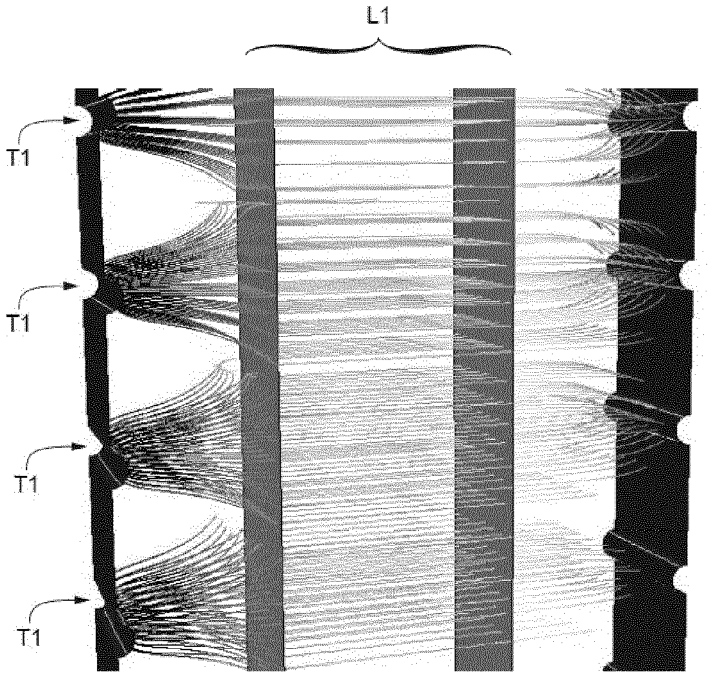


FIG. 9

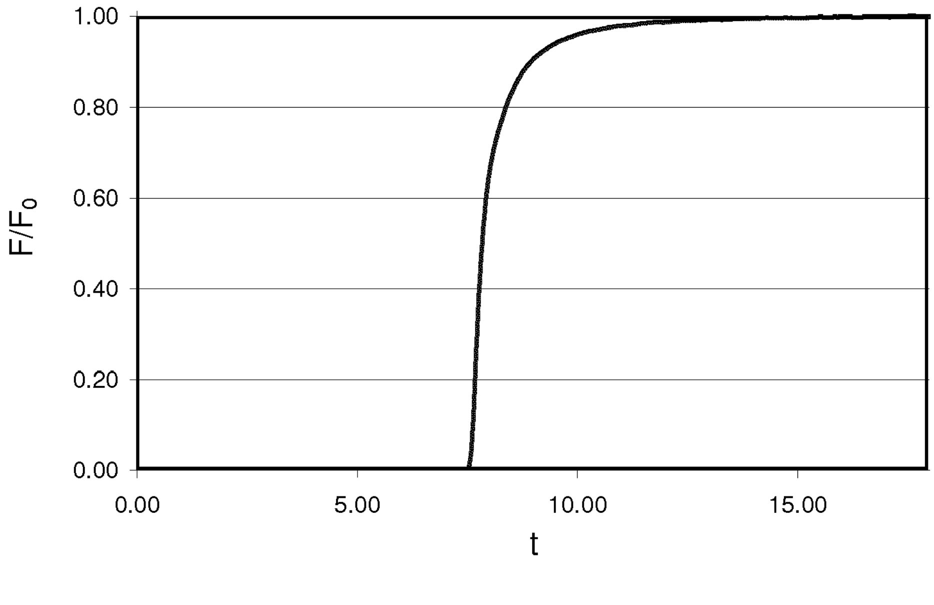


FIG. 10

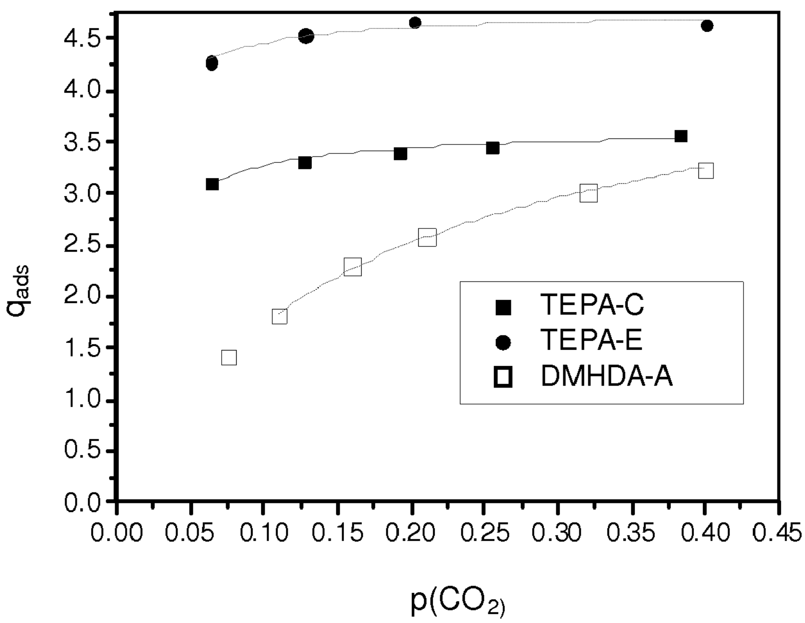
4.5
4.0
3.5
3.0
2.5
2.0
1.5
1.0
0.5
0.0
$q_{ads}$
0.00 0.05 0.10 0.15 0.20 0.25 0.30 0.35 0.40 0.45
p(CO2)
TEPA-C
TEPA-E
DMHDA-A

FIG. 11

Europäisches Patentamt
European Patent Office
Office européen des brevets

# RAPPORT PARTIEL DE RECHERCHE EUROPEENNE

selon la règle 62a et/ou 63 de la Convention sur le brevet européen. Ce rapport est consideré, aux fins de la procédure ultérieure, comme le rapport de la recherche européenne.

Numéro de la demande
EP 13 30 6608

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | ABDELHAMID SAYARI ET AL: "CO 2 -Induced Degradation of Amine-Containing Adsorbents: Reaction Products and Pathways", JOURNAL OF THE AMERICAN CHEMICAL SOCIETY, vol. 134, no. 33, 30 juillet 2012 (2012-07-30), pages 13834-13842, XP055077358, ISSN: 0002-7863, DOI: 10.1021/ja304888a<br>* abrégé; tableaux 1,2 *<br>* page 13836, colonne 1, alinéa 4 - colonne 2, alinéa 1 *<br>* page 13835, colonne 1, alinéa 5 *<br>-----<br>-/-- | 1,3-17 | INV.<br>B01D53/02<br>B01J20/32<br>B01D53/62<br>B01D53/82 |

DOMAINES TECHNIQUES RECHERCHES (IPC)

B01D
B01J

## RECHERCHE INCOMPLETE

La division de la recherche estime que la présente demande de brevet, ou une ou plusieurs revendications, ne sont pas conformes aux dispositions de la CBE de façon que seulement une recherche partielle a été établie.

Revendications ayant fait l'objet d'une recherche complète:

Revendications ayant fait l'objet d'une recherche incomplète:

Revendications n'ayant pas fait l'objet d'une recherche:

Raison pour la limitation de la recherche:

voir feuille supplémentaire C

2

| Lieu de la recherche | Date d'achèvement de la recherche | Examinateur |
|---|---|---|
| Munich | 17 juin 2014 | Burkhardt, Thorsten |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04E08)

Europäisches Patentamt
European Patent Office
Office européen des brevets

## RAPPORT PARTIEL DE RECHERCHE EUROPEENNE

Numero de la demande
EP 13 30 6608

| DOCUMENTS CONSIDERES COMME PERTINENTS | | | CLASSEMENT DE LA DEMANDE (IPC) |
|---|---|---|---|
| Catégorie | Citation du document avec indication, en cas de besoin, des parties pertinentes | Revendication concernée | |
| Y | ABDELHAMID SAYARI ET AL: "CO 2 -Induced Degradation of Amine-Containing Adsorbents: Reaction Products and Pathways", JOURNAL OF THE AMERICAN CHEMICAL SOCIETY, 22 août 2012 (2012-08-22), pages S1-S1, XP002712133, Extrait de l'Internet: URL:http://pubs.acs.org/doi/suppl/10.1021/ja304888a/suppl_file/ja304888a_si_001.pdf [extrait le 2013-09-03] * tableaux * ----- | 1,3-17 | |
| Y | FR 2 934 172 A1 (INST FRANCAIS DU PETROLE [FR]) 29 janvier 2010 (2010-01-29) * abrégé * * page 5, ligne 10 - ligne 15 * * page 18, ligne 16 - ligne 19 * ----- | 1,3-17 | DOMAINES TECHNIQUES RECHERCHES (IPC) |
| X | DE 20 2006 011163 U1 (BLUECHER GMBH [DE]) 19 juillet 2007 (2007-07-19) * abrégé * * alinéas [0001], [0004], [0049]; revendications 15,19,20,29 * ----- | 1,3,4,10 | |
| | -/-- | | |

2

EPO FORM 1503 03.82 (P04C11)

Europäisches Patentamt
European Patent Office
Office européen des brevets

**RAPPORT PARTIEL DE RECHERCHE EUROPEENNE**

Numero de la demande
EP 13 30 6608

| DOCUMENTS CONSIDERES COMME PERTINENTS | | | CLASSEMENT DE LA DEMANDE (IPC) |
|---|---|---|---|
| Catégorie | Citation du document avec indication, en cas de besoin, des parties pertinentes | Revendication concernée | |
| A | PIRNGRUBER G D ET AL: "Amines immobilized on a solid support for postcombustion CO2 capture-A preliminary analysis of the performance in a VSA or TSA process based on the adsorption isotherms and kinetic data", ENERGY PROCEDIA, ELSEVIER, NL, vol. 1, no. 1, 1 février 2009 (2009-02-01), pages 1335-1342, XP026472022, ISSN: 1876-6102, DOI: 10.1016/J.EGYPRO.2009.01.175 [extrait le 2009-02-01] * page 1339 * * page 1342, alinéa 4 * ----- | 12-14 | |
| A,D | FR 2 944 217 A1 (INST FRANCAIS DU PETROLE [FR]) 15 octobre 2010 (2010-10-15) * page 1, ligne 34 - page 4, ligne 3 * ----- | 12-14 | DOMAINES TECHNIQUES RECHERCHES (IPC) |
| A | US 4 544 384 A (METSCHL MICHAEL [DE] ET AL) 1 octobre 1985 (1985-10-01) * figures * ----- | 15,16 | |

2

EPO FORM 1503 03.82 (P04C11)

Europäisches Patentamt
European Patent Office
Office européen des brevets

# RECHERCHE INCOMPLETE FEUILLE SUPPLEMENTAIRE C

Numéro de la demande
EP 13 30 6608

Revendications ayant fait l'objet de recherches incomplètes:
1-17

Raison pour la limitation de la recherche:

La présente revendication 1 définit le "matériau adsorbant" à utiliser comme "une amine imprégnée sur un support solide" ayant "une constante d'adsorption comprise entre 1 et 50 bar -1 à 75°C".
Mis à part les amines divulguées dans la description, à savoir des diamines ou polyamines de la formule (I), c'est à dire qui comportent des chaînes de 6 atomes de carbone (p.5 li.20-28, p.9 li.23 - p.10 li.11, exemples, revendication 3) et des supports silice, alumine ou zéolithe (p.6 li.27, revendication 10, l'homme du métier ne saurait pas de prime abord si une amine imprégnée sur un support entrerait dans le cadre de la portée revendiquée. Un nombre excessif d'essais serait nécessaire afin de tester aléatoirement toutes les amines sur tous les supports. Le fait que chaque matériau adsorbant comprenant une quelconque amine imprégnée sur un quelconque support, puisse être testé pour déterminer la constante d'adsorption à la température spécifiée ne lève pas cette objection. La demande n'est pas conforme aux dispositions de fond au point qu'une recherche significative n'a pu être effectuée au regard de l'ensemble de l'objet revendiqué.
La recherche a par conséquent été limitée aux "matériaux adsorbants" des revendications 3 et 10 et, si ces composés possèdent une entité structurelle commune significative, à une généralisation de cette structure commune qui devrait pouvoir être déduite de la demande.
Autrement dit, la recherche a été limitée aux diamines/polyamines de la formule générale (I), c'est à dire comportant des chaînes de 6 atomes de carbone supportées sur de la silice, de l'alumine ou d'une zéolithe.

## ANNEXE AU RAPPORT DE RECHERCHE EUROPEENNE RELATIF A LA DEMANDE DE BREVET EUROPEEN NO. EP 13 30 6608

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-06-2014

| Document brevet cité au rapport de recherche | Date de publication | Membre(s) de la famille de brevet(s) | Date de publication |
|---|---|---|---|
| FR 2934172 A1 | 29-01-2010 | AU 2009275767 A1 | 04-02-2010 |
| | | CA 2731061 A1 | 04-02-2010 |
| | | CN 102105207 A | 22-06-2011 |
| | | EP 2310110 A2 | 20-04-2011 |
| | | EP 2318119 A1 | 11-05-2011 |
| | | EP 2318120 A1 | 11-05-2011 |
| | | FR 2934172 A1 | 29-01-2010 |
| | | JP 2011528993 A | 01-12-2011 |
| | | US 2011176981 A1 | 21-07-2011 |
| | | US 2011185901 A1 | 04-08-2011 |
| | | WO 2010012883 A2 | 04-02-2010 |
| | | WO 2010012884 A1 | 04-02-2010 |
| | | WO 2010012885 A1 | 04-02-2010 |
| DE 202006011163 U1 | 19-07-2007 | AT 539630 T | 15-01-2012 |
| | | DE 102006023155 A1 | 22-11-2007 |
| | | DE 202006011163 U1 | 19-07-2007 |
| | | EP 1856996 A1 | 21-11-2007 |
| FR 2944217 A1 | 15-10-2010 | AUCUN | |
| US 4544384 A | 01-10-1985 | AU 571467 B2 | 21-04-1988 |
| | | AU 2163883 A | 31-05-1984 |
| | | DD 230788 A1 | 11-12-1985 |
| | | DE 3243656 A1 | 30-05-1984 |
| | | IN 158219 A1 | 27-09-1986 |
| | | JP S59109220 A | 23-06-1984 |
| | | NL 8304040 A | 18-06-1984 |
| | | US 4544384 A | 01-10-1985 |
| | | ZA 8308746 A | 29-08-1984 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2958454
- FR 2944217
- US 5876488 A
- US 6364938 B
- WO 2008021700 A1
- US 6780817 B
- US 4704374 A
- FR 274468


### Littérature non-brevet citée dans la description


- **HIYOSHI et al.** Adsorption characteristics of carbon dioxide on organically functionalized SBA-15. *Microporous Mesoporous Materials,* 2005, 357-365
- **DRESE et al.** Synthesis-Structure-Property Relationships for Hyperbranched Aminosilica CO2 Adsorbents. *Adv. Funct. Mater.,* 2009, vol. 19 (23), 3821
- **XU et al.** Préparation and characterization of novel CO2 ''molecular basket'' adsorbents based on polymer-modified mesoporous molecular sieve MCM-41. *Microporous Mesoporous Materials,* 2003, vol. 62 (1-2), 29-45
- **YUE et al.** CO2 capture by As-prepared SBA-15 with an occluded organic template. *Advanced Functional Materials,* 2006, vol. 16, 1717-1722
- **GOEPPERT et al.** Nanostructured silica as a support for regenerable high-capacity organoamine-based CO2 sorbents. *Energy Environmental Science,* 2010, vol. 3 (12), 1949-1960
- **LEPAUMIER et al.** New Amines for CO2 Capture. III. Effect of Alkyl Chain Length between Amine Functions on Polyamines Degradation. *Ind. Eng. Chem. Res.,* 2010, vol. 49 (10), 4553-4560
- **RUTHVEN, D.M.** Principles of adsorption and adsorption processes. John Wiley & Sons, 1984